(19) Europäisches Patentamt
European Patent Office
Office européen des brevets

(11) EP 1 115 785 B1

(12) # FASCICULE DE BREVET EUROPEEN

(45) Date de publication et mention de la délivrance du brevet:
**09.10.2002 Bulletin 2002/41**

(21) Numéro de dépôt: **99934712.3**

(22) Date de dépôt: **20.07.1999**

(51) Int Cl.[7]: **C08K 5/17**, C08K 5/3415, C08K 5/54, C08L 21/00

(86) Numéro de dépôt international:
**PCT/EP99/05158**

(87) Numéro de publication internationale:
**WO 00/005300 (03.02.2000 Gazette 2000/05)**

(54) **SYSTEME DE COUPLAGE (CHARGE BLANCHE/ELASTOMERE DIENIQUE) A BASE D'ALKOXYSILANE POLYSULFURE, D'ENAMINE ET DE DERIVE GUANIDIQUE**

HAFTVERMITTLERZUSAMMENSETZUNG (WEISSER FÜLLSTOFF/DIENRUBBER) DIE EIN ALKOXYSILANPOLYSULFID, EIN ENAMIN UND EIN GUANIDINDERIVAT ENTHÄLT

COUPLING SYSTEM (WHITE FILLER/DIENE ELASTOMER) BASED ON POLYSULPHIDE ALKOXYSILANE, ENAMINE AND GUANIDINE DERIVATIVE

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **22.07.1998 FR 9809392**
**01.03.1999 FR 9902605**

(43) Date de publication de la demande:
**18.07.2001 Bulletin 2001/29**

(73) Titulaires:
- **Société de Technologie Michelin
63040 Clermont-Ferrand Cedex 09 (FR)**
- **MICHELIN RECHERCHE ET TECHNIQUE S.A.
CH-1763 Granges-Paccot (CH)**

(72) Inventeur: **PENOT, Christophe
F-63400 Chamalières (FR)**

(74) Mandataire: **Ribière, Joel
Michelin & Cie
Service SGD/LG/PI-LAD
63040 Clermont-Ferrand Cedex 09 (FR)**

(56) Documents cités:
**EP-A- 0 634 448**
**EP-A- 0 846 724**
**DE-A- 4 435 311**
**FR-A- 2 765 881**
**US-A- 4 082 706**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention se rapporte aux compositions de caoutchoucs diéniques renforcées d'une charge blanche, destinées particulièrement à la fabrication de pneumatiques ou de produits semi-finis pour pneumatiques, en particulier aux bandes de roulement de ces pneumatiques.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution de pneumatiques tels que par exemple des sous-couches, des gommes de calandrage ou de flancs ou des bandes de roulement et obtenir des pneumatiques aux propriétés améliorées, possédant notamment une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges blanches. Pour des raisons d'affinités réciproques, les particules de charge blanche ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge blanche/élastomère) susceptibles d'être créées pendant l'opération de mélangeage, étaient effectivement obtenues ; ces interactions tendent d'autre part à augmenter la consistance des compositions caoutchouteuses et donc à rendre leur mise en oeuvre *("processability")* à l'état cru plus difficile qu'en présence de noir de carbone.

L'intérêt pour les compositions de caoutchouc renforcées de charge blanche a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure. La demande EP-A-0 810 258 divulgue quant à elle une nouvelle composition de caoutchouc diénique renforcée d'une autre charge blanche particulière, en l'occurrence une alumine ($Al_2O_3$) spécifique à dispersibilité élevée, qui permet elle aussi l'obtention de pneumatiques ou de bandes de roulement ayant un tel excellent compromis de propriétés contradictoires.

L'utilisation de ces silices ou alumines spécifiques hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de "couplage" (charge blanche/élastomère), on entend de manière connue un agent apte à établir une connexion suffisante, de nature chimique et/ou physique, entre la charge blanche et l'élastomère ; un tel agent de couplage, au moins bifonctionnel, a par exemple comme formule générale simplifiée « Y-T-X », dans laquelle:

- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge blanche (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe hydrocarboné permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais

sont dépourvus de la fonction X active vis-à-vis de l'élastomère.

Des agents de couplage silice/élastomère, notamment, ont été décrits dans un grand nombre de documents, les plus connus étant des alkoxysilanes bifonctionnels.

Ainsi il a été proposé dans la demande de brevet FR-A-2 094 859 d'utiliser un mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage porteurs de fonctions -SH, et les compositions de caoutchouc les contenant, on peut citer par exemple les documents FR-A-2 206 330, US-A-4 002 594.

Pour remédier à cet inconvénient, il a été proposé de remplacer ces mercaptosilanes par des alkoxysilanes polysulfurés, notamment des polysulfures de bis-trialkoxyl($C_1$-$C_4$)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Parmi ces polysulfures, on citera notamment le disulfure de bis 3-triéthoxysilylpropyle (en abrégé TESPD), plus particulièrement le tétrasulfure de bis 3-triéthoxysilylpropyle (en abrégé TESPT) considéré aujourd'hui comme le produit apportant, pour des vulcanisats chargés à la silice, le meilleur compromis en terme de sécurité au grillage, de facilité de mise en oeuvre et de pouvoir renforçant.

La Demanderesse a découvert lors de ses recherches que l'utilisation d'une énamine en faible quantité, en combinaison avec un dérivé guanidique, a pour effet inattendu d'activer la fonction de couplage des alkoxysilanes polysulfurés, c'est-à-dire d'augmenter encore l'efficacité de ces derniers.

Grâce à cette activation, on peut notamment envisager de réduire de manière sensible la quantité d'alkoxysilanes polysulfurés habituellement utilisée. Ceci est particulièrement avantageux car ces alkoxysilanes sont d'une part très coûteux et doivent d'autre part être utilisés en une quantité importante, de l'ordre de deux à trois fois plus que la quantité de γ-mercaptopropyltrialkoxysilanes nécessaire pour obtenir des niveaux de propriétés de couplage équivalentes ; ces inconvénients bien connus ont été décrits par exemple dans les brevets US-A-5 652 310, US-A-5 684 171, US-A-S 684 172. Ainsi, le coût global des compositions de caoutchouc peut être notablement abaissé, ainsi que celui des pneumatiques qui les comportent.

En conséquence, un premier objet de l'invention concerne une composition de caoutchouc utilisable pour la fabrication de pneumatiques, comportant au moins (i) un élastomère diénique, (ii) une charge blanche à titre de charge renforçante, (iii) un alkoxysilane polysulfuré à titre d'agent de couplage (charge blanche/élastomère diénique) auquel sont associés (iv) une énanime et (v) un dérivé guanidique.

L'invention a également pour objet l'utilisation d'une composition de caoutchouc conforme à l'invention pour la fabrication d'articles en caoutchouc, en particulier de pneumatiques ou de produits semi-finis destinés à ces pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air ou les gommes intérieures étanches pour pneu sans chambre. L'invention concerne plus particulièrement l'utilisation d'une telle composition de caoutchouc pour la fabrication des flancs ou des bandes de roulement, en raison de ses bonnes propriétés hystérétiques.

L'invention concerne également un procédé de préparation d'une composition conforme à l'invention. ce procédé étant caractérisé en ce qu'on incorpore par malaxage à au moins (i) un élastomère diénique, au moins (ii) une charge blanche à titre de charge renforçante, (iii) un alkoxysilane polysulfuré à titre d'agent de couplage (charge blanche/élastomère diénique), (iv) une énamine et (v) un dérivé guanidique.

La composition conforme à l'invention est particulièrement adaptée à la confection de bandes de roulement de pneumatiques destinés à équiper des véhicules de tourisme, véhicules 4x4, camionnette, deux roues et poids-lourds, avions, engins de génie civil, agraire ou de manutention, ces bandes de roulement pouvant être utilisées lors de la fabrication de pneumatiques neufs ou pour le rechapage de pneumatiques usagés.

L'invention a également pour objet ces pneumatiques et ces produits semi-finis en caoutchouc eux-mêmes, notamment les bandes de roulement, lorsqu'ils comportent une composition de caoutchouc conforme à l'invention.

L'invention concerne également, en soi, un système de couplage (charge blanche/élastomère diénique) pour composition de caoutchouc diénique renforcée d'une charge blanche, utilisable pour la fabrication de pneumatiques. ledit système étant constitué par l'association d'un alkoxysilane polysulfuré, d'une énamine et d'un dérivé guanidique.

L'invention a également pour objet l'utilisation d'un tel système de couplage (charge hlanche/élastomère diénique) dans une composition de caoutchouc pour pneumatique.

L'invention a d'autre part pour objet l'utilisation en combinaison d'une énamine et d'un dérivé guanidique, dans les compositions de caoutchouc renforcées d'une charge blanche, utilisables pour la fabrication de pneumatiques,

pour activer la fonction de couplage (charge blanche/élastomère diénique) des alkoxysilanes polysulfurés.

L'invention ainsi que ses avantages seront aisément compris à la lumière de la description et des exemples de réalisation qui suivent, ainsi que des figures relatives à ces exemples qui représentent des courbes de variation de module en fonction de l'allongement pour différentes compositions de caoutchouc diénique, conformes ou non à l'invention.

## I. MESURES ET TESTS UTILISES

Les compositions de caoutchouc sont caractérisées avant et après cuisson, comme suit.

### I-1. Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e. avant cuisson) est moulée dans une enceinte cylindrique chauffée à 100°C. Après une minute de préchauffage, le rotor tourne au sein de l'éprouvette à 2 tours /minute et on mesure le couple utile pour entretenir ce mouvement après 4 minutes de rotation. La plasticité Mooney (ML 1+4) est exprimée en "unité Mooney" (UM, avec 1 UM=0.83 Newton.mètre).

### I-2. Temps de grillage

Les mesures sont effectuées à 130°C, conformément à la norme AFNOR-NFT-43004 (Novembre 1980). L'évolution de l'indice consistométrique en fonction du temps permet de déterminer le temps de grillage des compositions de caoutchouc, apprécié conformément à la norme précitée par le paramètre T5, exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais permettent de déterminer les contraintes d'élasticité et les propriétés à la rupture. Sauf indication différente, ils sont effectués conformément à la norme AFNOR-NFT-46002 de septembre 1988. On mesure en seconde élongation (i.e. après un cycle d'accommodation) les modules sécants nominaux (en MPa) à 10% d'allongement (M10), 100% d'allongement (M100) et 300% d'allongement (M300). On mesure également les contraintes à la rupture (en MPa) et les allongements à la rupture (en %). Toutes ces mesures de traction sont effectuées dans les conditions normales de température et d'hygrométrie selon la norme AFNOR-NFT-40101 (décembre 1979).

Un traitement des enregistrements de traction permet également de tracer la courbe de module en fonction de l'allongement (voir figures annexées), le module utilisé ici étant le module sécant vrai mesuré en première élongation, et calculé en se ramenant à la section réelle de l'éprouvette, et non à la section initiale comme précédemment pour les modules nominaux.

### I-4. Pertes hystérétiques

Les pertes hystérétiques (notées PH) sont mesurées par rebond à 60°C au 6ème choc, et exprimées en % selon la relation suivante ($W_0$ : énergie fournie ; $W_1$ : énergie restituée):

$$PH\ (\%) = 100[(W_0-W_1)/W_0]$$

## II. CONDITIONS DE REALISATION DE L'INVENTION

Outre les additifs usuels ou ceux susceptibles d'être utilisés dans une composition de caoutchouc diénique réticulable au soufre et destinée particulièrement à la fabrication de pneumatiques, les compositions de caoutchouc selon l'invention comportent, comme constituants de base, (i) au moins un élastomère diénique, (ii) au moins une charge blanche à titre de charge renforçante, (iii) au moins un alkoxysilane polysulfuré en tant qu'agent de couplage (charge blanche/élastomère diénique) auquel sont associés, pour activer le couplage, (iv) au moins une énamine et (v) au moins un dérivé guanidique.

Le système de couplage conforme à l'invention est quant à lui constitué d'un agent de couplage aikoxysilane polysulfuré, de préférence majoritaire (i.e., à plus de 50% en poids), et d'un activateur de couplage formé par l'association d'une énamine et d'un dérivé guanidique.

II-1. Elastomère diénique

Par élasiomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être mis en oeuvre dans les compositions conformes à l'invention:

(a) - tout homopolymère obtenu par polymérisation d'un monomère diène conjugué ayant de 4 à 12 atomes de carbone:

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;

(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) *ci*-dessus.

A titre de diènes conjugués conviennent notamment le butadiène-1,3, le 2-méthyl-1,3-butadiène, les 2,3-di (alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquences, microséquencés, et être préparés en dispersion ou en solution ; ils peuvent être couplés et/ou étoiles ou encore fonctionnalisés avec un agent de couplage et/ou d'étoilage ou de fonctionnalisation.

A titre préférentiel conviennent les polybutadiènes et en particulier ceux ayant une teneur en unités -1.2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de

la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isopréhique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères d'isoprène-styrène (SIR), les copolymères de butadiène-styrène-isoprène (SBIR) ou un mélange de deux ou plus de ces composés.

La composition conforme à l'invention est préférentiellement destinée à une bande de roulement pour pneumatique. Dans un tel cas, l'élastomère diénique est de préférence un copolymère de butadiène-styrène utilisé éventuellement en mélange avec un polybutadiène ; plus préférentiellement encore, l'élastomère diénique est un SBR préparé en solution ayant une teneur en syrène comprise entre 20% et 30% en poids, une teneur en liaisons vinyliques de la partie butadiénique comprise entre 15% et 65%, une teneur en liaisons trams-1,4 comprise entre 15% et 75% et une Tg comprise entre -20°C et -55°C, ce copolymère SBR étant éventuellement utilisé en mélange avec un polybutadiène possédant de préférence plus de 90% de liaisons cas-1.4.

Bien entendu, les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Charge renforçante

La charge blanche utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge blanche renforçante constitue la majorité, i.e. plus de 50 % en poids de la charge renforçante totale, plus préférentiellement plus de 80 % en poids de cette charge renforçante totale.

Dans la présente demande, on entend par charge blanche "renforçante" une charge blanche (parfois appelée aussi charge "claire") capable de renforcer à elle seule, sans autre moyen qu'un agent de couplage intermédiaire, une composition de caoutchouc destinée à la fabrication de pneumatiques, en d'autres termes capable de remplacer dans sa fonction de renforcement une charge conventionnelle de noir de carbone.

Préférentiellement, la charge blanche renforçante est une charge minérale du type silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées, en particulier lorsque l'invention est mise en oeuvre pour la fabrication de pneumatiques présentant une faible résistance au roulement. Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, les silices BV3380 et Ultrasil 7000 de la société Degussa, les silices Zeosil 1165 MP et 1115 MP de la société Rhodia, la silice Hi-Sil 2000 de la société PPG, les silices Zeopol 8715, 8741 ou 8745 de la Société Huber, des silices précipitées traitées telles que par exemple les silices "dopées" à l'aluminium décrites dans la demande EP-A-0 735 088. Si une alumine renforçante est utilisée, il s'agit préférentiellement d'une alumine hautement dispersible telle que décrite dans la demande EP-A-0 810 258, par exemple des alumines A125 ou CR125 (société Baïkowski), APA-100RDX (société Condéa), Aluminoxid C (société Degussa) ou AKP-G015 (Sumitomo Chemicals).

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices hautement dispersibles telles que décrites ci-dessus.

La charge blanche renforçante peut être également utilisée en coupage (mélange) avec du noir de carbone. Comme noirs de carbone conviennent tous les noirs de carbone, notamment les noirs du type HAF. ISAF, SAF, conventionnellement utilisés dans les pneus et particulièrement dans les bandes de roulement des pneus. A titre d'exemples non limitatifs de tels noirs, on peut citer les noirs N115, N134. N234, N339. N347, N375. La quantité de noir de carbone présente dans la charge renforçante totale peut varier dans de larges limites, cette quantité étant préférentiellement inférieure à la quantité de charge blanche renforçante présente dans la composition de caoutchouc.

De manière préférentielle, le taux de charge renforçante totale (charge blanche renforçante plus noir de carbone le cas échéant) est compris dans un domaine allant de 20 à 300 pce, plus préférentiellement de 30 à 150 pce,

encore plus préférentiellement de 50 à 130 pce (parties en poids pour cent d'élastomère), l'optimum étant différent selon la nature de la charge blanche renforçante utilisée et selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que poids lourd.

II-3. Agent de couplage

L'agent de couplage utilisé dans les compositions de caoutchouc conformes à l'invention est un alkoxysilane polysulfuré, porteur de manière connue de deux types de fonctions notées ici "Y" et "X", greffable d'une part sur la charge blanche au moyen de la fonction "Y" (fonction alkoxysilyle) et d'autre part sur l'élastomère au moyen de la fonction "X" (fonction soufrée).

Les alkoxysilanes polysulfurés sont largement connus de l'homme du métier comme agents de couplage (charge blanche/élastomère diénique) dans les compositions de caoutchouc destinées à la fabrication de pneumatiques ; on se reportera notamment aux brevets US-A-3 842 111, US-A-3 873 489, US-A-3 978 103, US-A-3 997 581 déjà cités, ou aux brevets plus récents US-A-5 580 919, US-A-5 583 245, US-A-5 663 396, US-A-5 684 171, US-A-5 684 172, US-A-5 696 197 qui décrivent en détail de tels composés connus.

Conviennent en particulier pour la mise en oeuvre de l'invention, sans que la définition ci-après soit limitative, des alkoxysilanes polysulfurés dits "symétriques" répondant à la formule générale (I) suivante:

$$\text{(I)} \qquad Z - A - S_n - A - Z\,,$$

dans laquelle:

- n est un entier de 2 à 8;
- A est un radical hydrocarboné divalent;
- Z répond à l'une des formules ci-après:

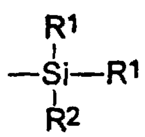 ; 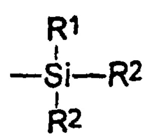 ; 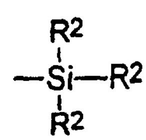 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$;
- les radicaux $R^2$, substitués ou non substitués, identiques ou différents entre eux, représentent un groupe alkoxyle en $C_1$-$C_{18}$ ou cycloalkoxyle en $C_5$-$C_{18}$.

Dans la formule (I) ci-dessus, le nombre n est de préférence un nombre entier de 2 à 5, plus préférentiellement de 3 à 5.

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 3 et 5, plus préférentiellement proche de 4. Mais l'invention peut être aussi avantageusement mise en oeuvre par exemple avec des alkoxysilanes disulfurés (n=2).

Le radical A, substitué ou non substitué, est de préférence un radical hydrocarboné divalent, saturé ou non saturé, comportant de 1 à 18 atomes de carbone. Conviennent notamment des groupements alkylène en $C_1$-$C_{18}$ ou des groupements arylène en $C_6$-$C_{12}$, plus particulièrement des alkylènes en $C_1$-$C_{10}$, notamment en $C_2$-$C_4$, en particulier le propylène.

Les radicaux $R^1$ sont préférentiellement des groupes alkyle en $C_1$-$C_6$, cyclohexyle ou phényle, notamment des groupes alkyle en $C_1$-$C_4$, plus particulièrement le méthyle et/ou l'éthyle.

Les radicaux $R^2$ sont préférentiellement des groupes alkoxyle en $C_1$-$C_8$ ou cycloalkoxyle en $C_5$-$C_8$, plus particulièrement le méthoxyle et/ou l'éthoxyle.

De tels alkoxysilanes polysulfurés dits "symétriques", ainsi que certains de leurs procédés d'obtention sont

par exemple décrits dans les brevets récents US-A-5 684 171 et US-A-5 684 172 donnant une liste détaillée de ces composés connus, pour n variant de 2 à 8.

Préférentiellement, l'alkoxysilane polysulfuré mis en oeuvre dans l'invention est un polysulfure, en particulier un disulfure ou un tétrasulfure, de bis(alkoxyl($C_1$-$C_4$)silylpropyle), plus préférentiellement de bis(trialkoxyl($C_1$-$C_4$)silylpropyle), notamment de bis(3-triéthoxysilylpropyle) ou de bis(3-triméthoxysilylpropyle). A titre d'exemple, le disulfure de bis(triéthoxysilylpropyle) ou TESPD, de formule $[(C_2H_5O)_3Si(CH_2)_3S]_2$, est commercialisé par exemple par la société Degussa sous les dénominations Si266 ou Si75 (dans le second cas, sous forme d'un mélange de disulfure (à 75% en poids) et de polysulfure), ou encore par la société Witco sous la dénomination Silquest A1589. Le tétrasulfure de bis(triéthoxysilylpropyle) ou TESPT, de formule $[(C_2H_5O)_3Si(CH_2)_3S_2]_2$, est commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

On utilise tout préférentiellement le TESPT. Mais un mode de réalisation avantageux de l'invention consiste à utiliser le TESPD, certes moins actif que le TESPT lorsqu'il est utilisé seul, mais dont l'efficacité est sensiblement améliorée par la présence de l'énamine et du dérivé guanidique.

Comme autre exemple d'organosilane polysulfuré, on peut citer par exemple un organosilane du type polymérique (ou oligomérique) tel que décrit dans les demandes WO96/10604 ou DE-A-44 35 311 et répondant à la formule (II) ci-après:

(II)

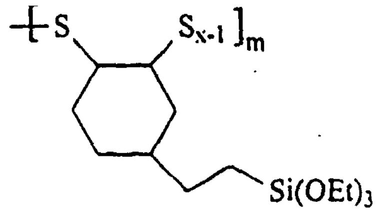

dans laquelle x = 1 à 8, m = 1 à 200, OEt représente le radical éthoxyle.

Dans les compositions de caoutchoucs conformes à l'invention, la teneur en alkoxysilane polysulfuré peut être comprise dans un domaine de 0,5 à 15% par rapport au poids de charge blanche renforçante, mais il est en général souhaitable d'en utiliser le moins possible. La présence d'énamine et de dérivé guanidique, dans ces compositions, permet avantageusement de pouvoir utiliser l'alkoxysilane polysulfuré à un taux préférentiel inférieur à 8%, plus préférentiellement encore inférieur à 6% par rapport au poids de charge blanche renforçante ; des taux compris entre 3% et 6% sont par exemple possibles.

Bien entendu, l'alkoxysilane polysulfuré pourrait être préalablement greffé (via la fonction "X") sur l'élastomère diénique de la composition de l'invention, l'élastomère ainsi fonctionnalisé ou "précouplé" comportant alors la fonction "Y" libre pour la charge blanche renforçante. L'alkoxysilane polysulfuré pourrait également être préalablement greffé (via la fonction "Y") sur la charge blanche renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état cru, utiliser l'agent de couplage soit greffé sur la charge blanche renforçante, soit à l'état libre (i.e., non greffé) tout comme l'énamine et le dérivé guanidique qui lui sont associés dans le système de couplage conforme à l'invention.

II-4. Activation du couplage

Le système de couplage selon l'invention est constitué de l'agent de couplage alkoxysilane polysulfuré précédemment défini et d'un activateur de couplage de cet alkoxysilane. Par "activateur" de couplage, on entend ici un corps (un composé ou une association de composés) qui, mélange avec l'agent de couplage, augmente l'efficacité de ce dernier.

L'activateur de couplage utilisé conformément à l'invention est formé par l'association d'une énamine et d'un dérivé guanidique.

A) Enamine

Une énamine répond de manière connue à la structure générale $R_2C=CR-NR_2$, en d'autres termes à la formule développée (III) qui suit:

(III)

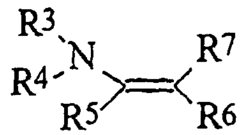

dans laquelle les radicaux $R^3$ et $R^4$, identiques ou différents entre eux, représentent un groupement hydrocarboné ayant de préférence de 1 à 20 atomes de carbone ; les radicaux $R^5$, $R^6$ et $R^7$, identiques ou différents entre eux, représentent un atome d'hydrogène ou un groupement hydrocarboné ayant de préférence de 1 à 20 atomes de carbone.

Les radicaux $R^3$ à $R^7$ ci-dessus peuvent être linéaires, cycliques ou branchés, substitués ou non substitués. A titre d'exemple, deux de ces radicaux pourraient être joints pour former un cycle avec l'atome d'azote dans lequel pourrait figurer éventuellement un second hétéroatome choisi par exemple parmi S, O et N.

Les énamines sont obtenues de manière connue par réaction d'un aldéhyde ou d'une cétone sur une amine secondaire ; elles ont par exemple été décrites, ainsi que leurs procédés d'obtention. dans les documents US-A-4 082 706 ou EP-A-0 634 448, comme agent antiozonant ou accélérateur de vulcanisation de caoutchoucs naturels ou synthétiques.

A titre d'énamine préférentielle utilisable dans les compositions de l'invention, on citera notamment l'énamine répondant à la formule (III-0) qui suit :

(III-0)

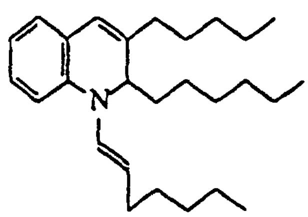

Une telle énamine a été décrite notamment dans la demande EP-A-0 634 448 précitée (voir formule III). Comme exemples d'énamines commerciales répondant à cette formule (III-0), on citera en particulier les énamines commercialisées par la société Great Lakes Chemical Italia (Italie) sous les dénominations Meramid FC et Meramid EN.

Comme autres énamines préférentielles, on citera également les énamines dérivées de la dibutylamine, de l'aniline, de la pipéridine ou de la pyrrolidine, comme par exemple le 1-pyrrolidino-1-cyclopentène (composé de formule III-1) ou le 1-pyrrolidino-1-cyclohexène (composé de formule III-2) dont les formules chimiques sont rappelées ci-après:

(III-1)

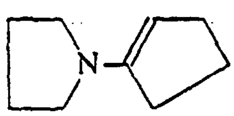

(III-2)

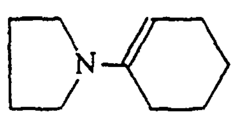

L'homme du métier, après avoir pris connaissance de l'invention, saura ajuster la teneur optimale en énamine en fonction de l'application visée, de la charge blanche utilisée et de la nature de l'élastomère mis en oeuvre, dans un domaine compris de préférence entre 0,1 et 3 pce, plus préférentiellement entre 0,2 et 1 pce. Des taux compris entre 0,2 et 0.6 pce sont avantageusement possibles.

Bien entendu, la teneur optimale en énamine sera choisie, en premier lieu, en fonction de la quantité d'alkoxysilane polysulfuré utilisée. Préférentiellement, dans le système de couplage selon l'invention, la quantité d'énamine représente entre 1% et 25% par rapport au poids d'alkoxysilane polysulfuré ; en dessous des taux minima indiqués l'effet risque d'être insuffisant, alors qu'au delà des taux maxima indiqués ci-dessus on n'observe généralement plus d'amélioration du couplage alors que les coûts de la composition augmentent et que l'on risque d'autre part d'être exposé aux risques de grillage évoqués précédemment. Pour les raisons exposées ci-dessus, la quantité d'énamine est plus préférentiellement comprise entre 3% et 17.5% par rapport au poids d'alkoxysilane polysulfuré.
De préférence, dans les compositions de caoutchouc selon l'invention, la quantité totale d'alkoxysilane polysulfuré et d'énamine représente moins de 10%, plus préférentiellement moins de 8% par rapport au poids de charge blanche renforçante ; avantageusement, cette quantité peut être comprise entre 4% et 8%.

B) Dérivé guanidique

Le second composant nécessaire à l'activation du couplage est un dérivé guanidique, c'est-à-dire une guanidine substituée. Les guanidines substituées sont bien connues de l'homme du métier, en particulier comme agents de vulcanisation, et ont été décrites dans de nombreux documents (voir par exemple *"Vulcanization and vulcanizing agents" by W.* Hofmann, Ed. MacLaren and Sons Ltd (London), 1967, pp. 180-182; EP-A-0 683 203 ou US-A-5 569 721).
Dans les compositions conformes à l'invention, on utilise de préférence la N,N'-diphénylguanidine (en abrégé "DPG") répondant à la formule particulière (IV-1) ci-dessous:

(IV-1)

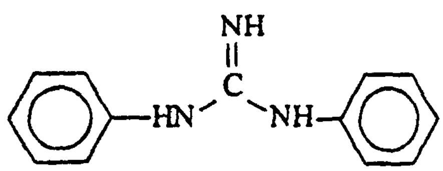

Mais on peut aussi utiliser des dérivés guanidiques autres que la DPG, en particulier d'autres dérivés guanidiques aromatiques répondant à la formule générale (IV-2) ci-dessous:

(IV-2)

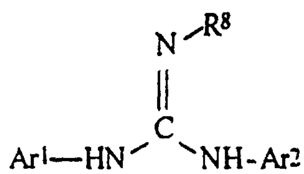

dans laquelle $Ar^1$ et $Ar^2$ représentent un groupement aryle, substitué ou non substitué, de préférence un groupement phényle, et $R^8$ représente un hydrogène ou un groupement hydrocarboné. A titre d'exemples de composés répondant à la formule (IV-2) ci-dessus, on peut citer, outre la DPG déjà citée, la triphénylguanidine ou encore la di-o-tolylguanidine.
Dans les compositions conformes à l'invention, la quantité de dérivé guanidique représente de préférence entre 0,5% et 4% par rapport au poids de charge blanche renforçante, plus préférentiellement entre 1% et 3%, soit de préférence entre 0,25 et 4 pce, plus préférentiellement entre 0,5 et 2 pce. En dessous des taux minima indiqués l'effet d'activation risque d'être insuffisant, alors qu'au-delà des maxima indiqués on n'observe généralement plus d'amélioration du couplage, tout en s'exposant à des risques de grillage.
De préférence, dans les compositions de l'invention, le système de couplage constitué par l'agent de couplage alkoxysilane polysulfuré et l'activateur de couplage (énamine+dérivé guanidique) représente au total entre 1% et 20% par rapport au poids de charge blanche renforçanie, plus préférentiellement entre 5% et 15%. Dans la plupart des cas, ce système de couplage s'est avéré suffisamment performant, pour les besoins des compositions destinées à la fabrication de pneumatiques, à un taux inférieur à 12%, voire même inférieur à 10% par rapport au poids de charge

blanche renforçante ; des taux compris entre 5% et 8% sont par exemple avantageusement possibles dans les compositions destinées aux bandes de roulement de pneumatiques pour véhicules tourisme. Par rapport au poids d'élastomère diénique présent dans les compositions de l'invention, le taux de système de couplage selon l'invention est de préférence compris entre 1 et 12 pce, plus préférentiellement entre 5 et 10 pce.

II-5. Additifs divers

Bien entendu, les compositions de caoutchouc conformes à l'invention comportent également tout ou partie des additifs habituellement utilisés dans les compositions de caoutchouc diénique réticulables au soufre et destinées à la fabrication de pneumatiques, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension, etc... A la charge blanche renforçante peut être également associée, si besoin est, une charge blanche conventionnelle non renforçante, comme par exemple des particules d'argile, de bentonite, talc, craie, kaolin, oxydes de titane.

Les compositions conformes à l'invention peuvent également contenir, en complément des alkoxysilanes polysulfurés, des agents de recouvrement (comportant par exemple la seule fonction Y) de la charge blanche renforçante ou plus généralement des agents d'aide à la mise en oeuvre susceptibles de manière connue, grâce à une amélioration de la dispersion de la charge blanche dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires, secondaires ou tertiaires, des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes). Ces compositions pourraient contenir, en plus, des agents de couplage autres que des alkoxysilanes polysulfurés.

II-6. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation ; de telles phases ont été décrites par exemple dans la demande EP-A-0 501 227 précitée.

Selon un mode de réalisation préférentiel de l'invention, tous les constituants de base des compositions conformes à l'invention, à savoir (ii) la charge blanche renforçante et le système de couplage selon l'invention constitué par l'association de (iii) l'alkoxysilane polysulfuré, de (iv) l'énamine et du (v) dérivé guanidique, sont incorporés à (i) l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires y compris le système de couplage selon l'invention, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (de préférence à une température inférieure à 100°C). dans le but de faire subir aux compositions un traitement thermique complémentaire, notamment pour améliorer encore la dispersion, dans la matrice élastomérique, de la charge blanche renforçante et de son système de couplage.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée par exemple sous la forme d'une feuille, d'une plaque ou encore d'un profilé de caoutchouc utilisable pour la fabrication de semi-finis tels que des bandes de roulement.

La vulcanisation (ou cuisson) est conduite de manière connue à une température généralement comprise entre 130°C et 200°C. pendant un temps suffisant qui peut varier par exemple entre 5 et 90 min en fonction notamment de la température de cuisson, du système de vulcanisation adopté et de la cinétique de vulcanisation de la composition

considérée.

Il va de soi que l'invention concerne les compositions de caoutchouc précédemment décrites tant à l'état cru (i.e., avant cuisson) qu'à l'état cuit (i.e., après réticulation ou vulcanisation).

Bien entendu, les compositions conformes à l'invention peuvent être utilisées seules ou en coupage avec toute autre composition de caoutchouc utilisable pour la fabrication de pneumatiques.

## III. EXEMPLES DE REALISATION DE L'INVENTION

### III-1. Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique ou le mélange d'élastomères diéniques, la charge renforçante, le système de couplage selon l'invention, puis les divers autres ingrédients à l'exception du système de vulcanisation. On conduit alors un travail thermomécanique (phase non-productive) en une ou deux étapes selon les cas (durée totale du malaxage : 2 à 5 minutes), jusqu'à atteindre une température maximale de "tombée" d'environ 165°C.

On récupère le mélange ainsi obtenu, on le refroidit puis on ajoute soufre et sulfénamide sur un mélangeur exteme (homo-finisseur) à 30°C, en mélangeant le tout (phase productive) pendant un temps approprié compris entre 5 et 12 minutes selon les cas.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple -comme produits semi-finis pour pneumatiques, en particulier comme bandes de roulement.

Dans les essais qui suivent, la charge blanche renforçante (silice ou coupage silice/alumine) constitue la totalité de la charge renforçante, mais il va de soi qu'une fraction de cette dernière, de préférence minoritaire, pourrait être remplacée par du noir de carbone.

### III-2. Essais

#### A) Essai 1

Dans ce premier essai, on compare deux compositions de caoutchouc (mélange d'élastomères diéniques SBR et BR) renforcées de silice, destinées à la fabrication de pneumatiques ou de bandes de roulement pour pneumatiques. L'élastomère SBR est préparé en solution et comprend 26.5% de styrène, 59.5% de motifs polybutadiène 1-2 et 23% de motifs polybutadiène 1-4 trans ; l'élastomère BR comporte 93% de motifs 1-4 cis.

Ces deux compositions sont identiques aux différences près qui suivent:

- composition N°1 : TESPT (6,4 pce);
- composition N°2 : TESPT (6,4 pce) auquel est associé l'énamine de formule III-0 (0,5 pce, soit 7,8% par rapport au poids de TESPT).

Chaque composition comporte en outre 1,5 pce de dérivé guanidique (soit environ 1,9% par rapport au poids de charge blanche renforçante). La composition N°1 est le témoin de cet essai, elle contient un taux de TESPT de 8% par rapport au poids de charge blanche renforçante (6.4 pce de TESPT pour 80 pce de silice), mais est dépourvue d'énamine. Dans la composition N°2 conforme à l'invention, la quantité d'alkoxysilane et d'énamine représente moins de 10% (précisément 8,6%) par rapport au poids de charge blanche renforçante ; quant au système de couplage conforme à l'invention (TESPT+énamine+DPG), il est avantageusement présent à un taux inférieur à 12% par rapport au poids de charge blanche renforçante.

Les tableaux 1 et 2 donnent la formulation des différentes compositions (tableau 1 - taux des différents produits exprimés en pce), leurs propriétés avant et après cuisson (40 min à 150°C). La figure 1 reproduit quant à elle les courbes de module (en MPa) en fonction de l'allongement (en %) ; ces courbes sont notées C1 et C2 et correspondent respectivement aux compositions N°1 et N°2.

L'examen des résultats du tableau 2 montre que la composition selon l'invention N°2, comparée à la coniposition témoin N°1, présente à l'état cru une viscosité Mooney peu différente (donc des propriétés de mise en oeuvre équivalentes), un temps de grillage certes plus faible mais satisfaisant et à l'état cuit des propriétés sensiblement améliorées:

- modules aux fortes déformations (M100 et M300) plus élevés, rapport M300/M100 également supérieur (de manière connue de l'homme du métier, indicateurs d'un plus fort renforcement);
- des pertes hystérétiques (PH) plus faibles;
- une contrainte à la rupture supérieure.

La figure 1 annexée confirme les résultats ci-dessus : pour des allongements de 100% et plus, toutes les valeurs de module sont supérieures dans le cas de la composition N°2 (courbe C2) ; pour un tel domaine d'allongements, un tel comportement illustre une meilleure interaction entre la charge blanche renforçante et l'élastomère.
En résumé, tous les résultats obtenus après cuisson sont représentatifs d'un meilleur couplage entre la charge blanche renforçante et l'élastomère diénique, en d'autres termes d'une activation par l'énamine et le dérivé guanidique de la fonction de couplage de l'alkoxysilane polysulfuré.

B) Essai 2

Cet essai a pour but de montrer qu'il est possible, grâce à l'activation apportée par l'énamine, d'abaisser fortement la quantité d'alkoxysilane polysulfuré, en particulier de TESPT, sans affecter les propriétés de renforcement des compositions par la charge blanche.
On compare quatre compositions de caoutchouc (coupage SBR et BR) similaires à celles de l'essai 1 précédent, ces compositions étant identiques aux différences près qui suivent:

- composition N°3: TESPT (6,4 pce);
- composition N°4: TESPT (4 pce);
- composition N°5: TESPT (4 pce) plus énamine de formule III-0 (0,5 pce, soit 12,5% par rapport au poids de TESPT);
- composition N°6: TESPT (4,8 pce) plus énamine de formule III-0 (0,25 pce, soit 5,2% par rapport au poids de TESPT).

Chaque composition comporte en outre 1,5 pce de dérivé guanidique. Seules les compositions N°5 et N°6 sont donc conformes à l'invention ; la composition N°3 est la composition référence de l'art antérieur, la composition N°4 représente un témoin avec un taux identique de TESPT par rapport à la composition N°5. Les tableaux 3 et 4 donnent la formulation des différentes compositions, leurs propriétés avant et après cuisson (150°C, 40 minutes). La figure 2 reproduit les courbes de module (en MPa) en fonction de l'allongement (en %) ; ces courbes sont notées C3 à C6 et correspondent respectivement aux compositions de caoutchouc N°3 à N°6.
Dans la composition N°3 selon l'art antérieur, on note que le taux de TESPT représente 8% par rapport au poids de silice, ce qui est supérieur de 60% au taux de TESPT utilisé dans la composition N°5 et de plus de 30% à celui utilisé dans la composition N°6, toutes deux conformes à l'invention.
Dans les compositions conformes à l'invention la quantité d'alkoxysilane polysulfuré représente moins de 8% (précisément 6% pour la composition N°6), plus préférentiellement moins de 6% (précisément 5% pour la composition N°5) par rapport au poids de charge blanche renforçante. Dans ces deux compositions conformes à l'invention, la quantité totale (TESPT+énamine) représente avantageusement moins de 8% (6,3% pour la composition N°6), plus avantageusement encore moins de 6% (5,6% pour la composition N°5) par rapport au poids de charge blanche renforçante. Quant au système de couplage lui-même (TESPT+énamine+DPG), son taux reste avantageusement inférieur à 10% (8,2% pour la composition N°6), plus avantageusement encore inférieur à 8% (7,5% pour la composition N°5) par rapport au poids de charge blanche renforçante.
L'étude des différents résultats montre que les compositions N°5 et N°6 conformes à l'invention présentent, comparées d'une part à la composition de référence -N°3, des performances après cuisson équivalentes malgré un taux de TESPT nettement plus bas, et, comparées d'autre part à la composition témoin N°4 contenant la même quantité de TESPT mais dépourvue d'énamine, des performances globalement supérieures:

- modules aux fortes déformations (M100, M300) et rapport M300/M100 sensiblement identiques à ceux de la composition référence N°3, nettement supérieurs à ceux de la composition témoin N°4;
- pertes hystérétiques (PH) sensiblement identiques;
- des propriétés à la rupture équivalentes.

La figure 2 annexée confirme bien l'effet d'activation de couplage apportée par l'énamine et la diphénylguanidine : on voit nettement que les valeurs de module, pour des allongements de 100% et plus, sont sensiblement identiques pour les compositions N°3, N°5 et N°6 (courbes C3, C5 et C6 quasiment confondues), nettement supérieures à celles observées sur la composition témoin N°4.
On peut donc ainsi abaisser de manière très sensible (de 6,4 pce à 4 pce) la quantité de TESPT dans les compositions de caoutchouc conformes à l'invention, tout en maintenant les propriétés de renforcement à un niveau

sensiblement identique.

Certes, la diminution du taux de silane entraîne, de manière attendue, une augmentation de la viscosité à cru et une très légère diminution du temps de grillage, mais les variations observées restent tout à fait acceptables.

En particulier, l'homme du métier saura corriger, si nécessaire, l'augmentation de viscosité à l'état cru par l'addition d'une faible quantité d'agent de recouvrement. Des essais complémentaires ont par exemple été réalisés qui montrent que l'addition de 2,4 pce d'un agent de recouvrement tel que le 1-octyl-triéthoxysilane (produit commercialisé par la société Hüls sous la dénomination Dynasylan Octeo) à la composition conforme à l'invention N°5 permet d'abaisser la viscosité Mooney à une valeur de 78 UM, le module M10 à 4,4 MPa (autre indicateur d'un meilleur recouvrement de la silice), avec en plus une meilleure hystérèse (2.5 points de moins sur PH), sans que les propriétés de renforcement soient modifiées (M100, M300, M300/M100 et contrainte à la rupture identiques).

C) Essai 3

Cet essai démontre qu'il est possible, grâce à l'activation apportée par l'énamine et le dérivé guanidique, de remplacer un alkoxysilane tétrasulfuré (TESPT) par un alkoxysilane disulfuré (TESPD), connu comme moins actif que le précédent, sans pratiquement affecter les propriétés des compositions de caoutchouc.

On compare trois compositions de caoutchouc similaires à celles des essais 1 et 2 précédents, ces trois compositions étant identiques aux différences près qui suivent:

- composition N°7: TESPT (6,4 pce);
- composition N°8: TESPD (5,6 pce);
- composition N°9: TESPD (5,6 pce) plus énamine de formule III-0 (0,5 pce, soit 8,9% par rapport au poids de TESPD).

Chaque composition comporte en outre 1,5 pce de dérivé guanidique. La composition N°7 est le témoin de cet essai (8% de TESPT par rapport au poids de charge blanche renforçante) ; la composition N°8, également non conforme à l'invention, contient le TESPD à un taux isomolaire par rapport au taux de TESPT, c'est-à-dire que pour les deux compositions N°7 et N°8 on utilise le même taux de fonctions triéthoxysilanes réactives vis-à-vis de la silice et de ses groupes hydroxyles de surface. La composition N°9 est la seule composition conforme à l'invention ; son taux d'alkoxysilane représente moins de 8% (précisément 7%) par rapport au poids de silice (80 pce), la quantité (TESPD+énamine) représentant moins de 8% (précisément 7,6%) par rapport à ce même poids ; quant au système de couplage selon l'invention (ici. TESPD+énamine+DPG), son taux représente avantageusement moins de 10% (précisément 9.5%) par rapport au poids de charge blanche renforçante.

Les tableaux 5 et 6 donnent la formulation des différentes compositions, leurs propriétés avant et après cuisson (150°C, 40 minutes) ; la figure 3 reproduit les courbes de module (en MPa) en fonction de l'allongement (en %), ces courbes étant notées C7 à C9 et correspondant respectivement aux compositions N°7 à N°9.

On note que la composition N°8, comparée à la composition N°7, présente des propriétés de renforcement après cuisson (M100, M300 et rapport M300/M100) qui sont nettement inférieures, une résistance à la rupture moindre, ainsi que des pertes hystérétiques plus importantes : tout ceci est dû à la moindre efficacité de couplage (charge blanche/élastomère diénique) de l'alkoxysilane disulfuré par rapport à l'alkoxysilane tétrasulfuré.

Cependant, grâce à l'ajout d'une faible quantité d'énamine dans la composition N°9, on peut observer une remontée très sensible des propriétés de renforcement (M100, M300, M300/M100, contrainte à la rupture) et un abaissement de PH, ces propriétés étant ramenées pratiquement aux mêmes niveaux que ceux observés sur la composition N°7. Cette efficacité de l'énamine combinée au dérivé guanidique. comme activateur de couplage du TESPD, est aussi clairement illustrée par les courbes de la figure 3 (courbes C7 et C9 quasiment confondues et situées, pour des allongements supérieurs à 100%, bien au-delà de la courbe C8).

D) Essai 4

Dans cet essai, on prépare trois compositions de caoutchouc (mélange d'élastomères diéniques SBR et BR) similaires à celles des essais précédents, destinées à la fabrication de pneumatiques ou de bandes de roulement pour pneumatiques.

Ces trois compositions sont identiques aux différences près qui suivent:

- composition N°10: TESPT (6,4 pce);
- composition N°11: TESPT (6,4 pce) auquel est associé l'énamine de formule III-1 (0.5 pce, soit 7.8% par rapport au poids de TESPT);
- composition N°12: TESPT (6,4 pce) auquel est associée l'énamine de formule III-2 (0.55 pce, soit 8.6% par rapport

au poids de TESPT).

Chaque composition comporte en outre 1,5 pce de dérivé guanidique. La composition N°10 est le témoin de cet essai, elle contient un taux de TESPT de 8% par rapport au poids de charge blanche renforçante (6,4 pce de TESPT pour 80 pce de silice), mais est dépourvue d'énamine. Les compositions N°11 et N°12 conformes à l'invention contiennent le système de couplage conforme à l'invention (TESPT+énamine+DPG) à un taux inférieur à 12% par rapport au poids de charge blanche renforçante ; pour ces compositions, la quantité (TESPT+énamine) représente quant à elle moins de 10% par rapport au poids de charge blanche renforçante.

Les tableaux 7 et 8 donnent la formulation des différentes compositions (tableau 7 - taux des différents produits exprimés en pce), leurs propriétés avant et après cuisson (40 min à 150°C). La figure 4 reproduit quant à elle les courbes de module (en MPa) en fonction de l'allongement (en %) ; ces courbes sont notées C10, C11 et C12 et correspondent respectivement aux compositions N°10, N°11 et N°12.

L'examen des résultats du tableau 8 montre que les compositions selon l'invention N°11 et N°12, comparées à la composition témoin N°10, présentent à l'état cru une viscosité Mooney peu différente (donc des propriétés de mise en oeuvre équivalentes), à l'état cuit des propriétés sensiblement améliorées:

- modules aux fortes déformations (M100 et M300) plus élevés, rapport M300/M100 également supérieur (de manière connue de l'homme du métier, indicateurs d'un meilleur renforcement);
- des pertes hystérétiques (PH) légèrement plus faibles;
- une contrainte à la rupture supérieure.

La figure 4 annexée confirme bien les résultats ci-dessus : pour des allongements de 100% et plus, toutes les valeurs de module sont supérieures dans le cas des compositions N°11 et N°12 (courbes C11 et C12 quasiment confondues), ce qui illustre une meilleure interaction entre la charge blanche renforçante et l'élastomère.

E) Essai 5

Cet essai similaire à l'essai 2 précédent, mais en présence d'énamines différentes, a pour but de confirmer qu'il est possible, grâce à l'activation apportée par l'énamine et le dérivé guanidique, d'abaisser fortement la quantité d'alkoxysilane polysulfuré, en particulier de TESPT, sans affecter les propriétés de renforcement des compositions par la charge blanche.

On compare quatre compositions de caoutchouc similaires à celles des essais précédents, ces quatre compositions étant identiques aux différences près qui suivent:

- composition N°13: TESPT (6,4 pce);
- composition N°14: TESPT (4 pce);
- composition N°15: TESPT (4 pce) plus énamine de formule III-1 (0,5 pce, soit 12,5% par rapport au poids de TESPT);
- composition N°16: TESPT (4 pce) plus énamine de formule III-2 (0,55 pce, soit 13,75% par rapport au poids de TESPT).

Chaque composition comporte en outre 1,5 pce de dérivé guanidique. Seules les compositions N°15 et N°16 sont donc conformes à l'invention ; la composition N°13 est la composition référence de l'art antérieur, la composition N°14 représente un témoin avec un taux identique de TESPT par rapport aux compositions N°15 et N°16. Les tableaux 9 et 10 donnent la formulation des différentes compositions, leurs propriétés avant et après cuisson (150°C. 40 minutes). La figure 5 reproduit les courbes de module (en MPa) en fonction de l'allongement (en %) ; ces courbes sont notées C13 à C16 et correspondent respectivement aux compositions de caoutchouc N°13 à N°16.

Dans la composition N°13 selon l'art antérieur, on note que le taux de TESPT représente 8% par rapport au poids de silice, ce qui est supérieur de 60% au taux de TESPT utilisé dans la composition N°15 et N°16 toutes deux conformes à l'invention. Dans ces compositions N°15 et N°16, la quantité d'alkoxysilane polysulfuré représente avantageusement moins de 6% (précisément 5%) et la quantité totale (TESPT+énamine) moins de 6% (5,6% pour la composition N°15 et 5,7% pour la composition N°16) par rapport au poids de charge blanche renforçante. Quant au système de couplage lui-même (TESPT+énamine+DPG), son taux reste avantageusement inférieur à 8% (7,5% pour la composition N°15 et 7,6% pour la composition N°16) par rapport au poids de charge blanche renforçante.

L'étude des différents résultats montre que les compositions N°15 et N°16 conformes à l'invention présentent, comparées d'une part à la composition de référence N°13, des performances après cuisson très proches malgré un taux de TESPT nettement plus bas, et comparées d'autre part à la composition témoin N°14 contenant la même quantité de TESPT, des performances globalement supérieures:

- modules aux fortes déformations (M100, M300) et rapport M300/M100 sensiblement identiques à ceux de la composition référence N°13, nettement supérieurs à ceux de la composition témoin N°14;
- pertes hystérétiques (PH) très proches de celles de la composition N°13, plus faibles que celles de la composition N°14;
- des propriétés à la rupture équivalentes.

La figure 5 annexée confirme bien l'effet d'activation de couplage apportée par l'énamine et le dérivé guanidique : on voit nettement que les valeurs de module, pour des allongements de 100% et plus, sont sensiblement identiques sur les compositions N°13, N°15 et N°16 (courbes C13, C15 et C16 quasiment confondues), nettement supérieures à celles observées sur la composition témoin N°14.

Il est ainsi confirmé qu'il est possible d'abaisser de manière très sensible (de 6,4 pce à 4 pce) la quantité de TESPT dans les compositions de caoutchouc conformes à l'invention, tout en maintenant les propriétés de renforcement à un niveau sensiblement identique.

Certes, la diminution du taux de silane entraîne, de manière attendue, une augmentation de la viscosité à cru mais les variations observées restent acceptables. Comme indiqué précédemment, l'homme du métier saura corriger, si nécessaire, l'augmentation de viscosité à l'état cru par l'addition d'une faible quantité d'agent de recouvrement. Des essais complémentaires ont été réalisés qui montrent par exemple que l'addition de 1,5 pce d'un agent de recouvrement tel que le $\alpha,\omega$-dihydroxy-polydiméthylsiloxane (produit commercialisé par la société ABCR sous la dénomination PS340) à la composition conforme à l'invention N°15 permet d'abaisser la viscosité Mooney à une valeur de 95 UM, le module M10 à 5,35 MPa (autre indicateur d'un meilleur recouvrement de la silice), avec en plus une meilleure hystérèse (2 points de moins sur PH), sans que les propriétés de renforcement soient modifiées (M100, M300, M300/M100 et contrainte à la rupture identiques).

F) Essai 6

Cet essai similaire à l'essai 3 précédent a pour but de confirmer, en présence d'une autre énamine, que l'activation apportée par l'énamine et le dérivé guanidique permet de remplacer un alkoxysilane tétrasulfuré (TESPT) par un alkoxysilane disulfuré (TESPD), connu comme moins actif que le précédent, sans pratiquement affecter les propriétés des compositions de caoutchouc.

On compare pour cela deux compositions de caoutchouc similaires à celles des essais précédents, ces deux compositions étant identiques aux différences près qui suivent:

- composition N°17: TESPD (5,6 pce);
- composition N°18: TESPD (5,6 pce) plus énamine de formule III-1 (0,5 pce soit 8,9% par rapport au poids de TESPD).

Les deux compositions contiennent 1,5 pce de dérivé guanidique. La composition N°17, non conforme à l'invention, contient le TESPD à un taux isomolaire par rapport au taux de TESPT de 6,4 pce utilisé dans la plupart des compositions témoins précédentes, c'est-à-dire que l'on utilise le même taux de fonctions triéthoxysilanes réactives vis-à-vis de la silice et de ses groupes hydroxyles de surface. Par rapport au poids de charge blanche renforçante, la composition N°18 conforme à l'invention comporte (% en poids) moins de 8% (précisément 7%) de TESPD, moins de 8% (précisément 7,6%) de (TESPD+énamine), moins de 10% (précisément 9,5%) de (TESPD+énamine+DPG).

Les tableaux 11 et 12 donnent la formulation des différentes compositions, leurs propriétés avant et après cuisson (150°C, 40 minutes) ; la figure 6 reproduit les courbes de module (en MPa) en fonction de l'allongement (en %), ces courbes étant notées C17 et C18 et correspondant respectivement aux compositions N°17 et N°18.

On note que grâce à l'ajout d'une faible quantité d'énamine (seulement 0,5 pce) dans la composition N°18, on peut observer une remontée des propriétés de renforcement (M100, M300, M300/M100, contrainte à la rupture supérieurs) et un abaissement des pertes PH par rapport à la composition N°17. L'activation de couplage apportée par l'énamine combinée au dérivé guanidique est également clairement illustrée par les courbes de la figure 6 (courbe C18 située, pour des allongements supérieurs à 100%, au-delà de la courbe C17).

G) Essai 7

Cet essai a pour but de montrer que l'invention s'applique à des alkoxysilanes polysulfurés autres que les alkoxysilanes polysulfurés symétriques utilisés dans les essais précédents.

On prépare deux compositions de caoutchouc identiques aux différences près qui suivent:

- composition N°19 : silane de formule II (6,4 pce);

- composition N°20 : silane de formule II (6,4 pce) auquel est associé l'énamine de formule III-0 (0,5 pce, soit 7.8% par rapport au poids d'alkoxysilane).

Chaque composition contient 1,5 pce de dérivé guanidique. La composition N°19 est le témoin de cet essai, elle contient un taux de silane de 8% par rapport au poids de charge blanche renforçante (6,4 pce pour 80 pce de silice), mais est dépourvue d'énamine. La composition N°20, conforme à l'invention, comporte le système de couplage conforme à l'invention (silane+énamine+dérivé guanidique) à un taux inférieur à 12% (précisément 10.5%) par rapport au poids de charge blanche renforçante.

Les tableaux 13 et 14 donnent la formulation des différentes compositions, leurs propriétés avant et après cuisson (40 min à 150°C). La figure 7 reproduit quant à elle les courbes de module (en MPa) en fonction de l'allongement (en %) ; ces courbes sont notées C19 et C20 et correspondent respectivement aux compositions N°19 et N°20.

L'examen des résultats du tableau 14 montre que la composition selon l'invention N°20, comparée à la composition témoin N°19, présente à l'état cru une viscosité Mooney identique (donc des propriétés de mise en oeuvre équivalentes), un temps de grillage certes plus faible mais satisfaisant, et à l'état cuit des propriétés sensiblement améliorées:

- modules aux fortes déformations (M100 et M300) plus élevés, rapport M300/M100 également supérieur (donc un renforcement supérieur);
- des pertes hystérétiques (PH) plus faibles;
- avec une contrainte à la rupture identique.

La figure 7 confirme les résultats ci-dessus : pour des allongements de 100% et plus, les valeurs de module sont nettement supérieures dans le cas de la composition N°20 (courbe C20), ce qui illustre clairement une meilleure interaction entre la charge blanche renforçante et l'élastomère.

H) Essai 8

On prépare deux compositions de caoutchouc similaires à celles précédemment testées, la charge renforçante étant ici constituée par un mélange (50/50) de silice et d'alumine renforçantes. L'alumine est une alumine telle que décrite dans la demande EP-A-0 810 258 précitée.

Ces deux compositions sont identiques aux différences près qui suivent:

- composition N°21 : TESPT (6,5 pce);
- composition N°22 : TESPT (6,5 pce) auquel est associé l'énamine de formule III-0 (0,5 pce, soit 7,7% par rapport au poids de TESPT).

Chaque composition comporte en outre 0,9 pce de diphénylguanidine (soit environ 0,9% par rapport au poids de charge blanche renforçante). La composition N°21 est le témoin de cet essai, elle contient un taux de silane de 6,6% environ par rapport au poids de charge blanche renforçante (6.5 pce de silane par rapport à 99 pce de charge blanche renforçante), mais elle est dépourvue d'énamine. La composition N°22, conforme à l'invention, comporte le système de couplage conforme à l'invention (TESPT+énamine+DPG) à un taux avantageusement inférieur à 8% (précisément 7.9%) par rapport au poids de charge blanche renforçante totale.

Les tableaux 15 et 16 donnent la formulation des différentes compositions et leurs propriétés avant et après cuisson (40 min à 150°C).

L'examen des résultats du tableau 16 montre des propriétés comparables à l'état cru (donc des propriétés de mise en oeuvre équivalentes), et, à l'état cuit, une fois encore des propriétés sensiblement améliorées pour la composition conforme à l'invention : modules M100 et M300 plus élevés, rapport M300/M100 supérieur, pertes hystérétiques (PH) légèrement plus faibles, contrainte à la rupture supérieure.

I) Essai 9

On prépare trois compositions similaires à celles de l'essai précédent, la charge renforçante étant constituée par un mélange (coupage 70/30) de silice et d'alumine. L'alumine utilisée ici est une alumine renforçante telle que décrite dans la demande EP-A-0 810 258. Deux énamines différentes sont testées.

Ces trois compositions sont identiques aux différences près qui suivent:

- composition N°23: TESPT (6 pce);
- composition N°24: TESPT (6 pce) auquel est associé l'énamine de formule III-0 (0.5 pce, soit 8.3% par rapport

au poids de TESPT);

- composition N°25: TESPT (6 pce) auquel est associée l'énamine de formule III-2 (0,55 pce, soit 9.2% par rapport au poids de TESPT).

Chaque composition comporte en outre 1,2 pce de dérivé guanidique. La composition N°23 est le témoin de cet essai, elle contient un taux de TESPT de 6,8% par rapport au poids de charge blanche renforçante (6 pce de TESPT pour 88 pce de charge blanche renforçante), niais est dépourvue d'énamine. Les compositions N°24 et N°25, conformes à l'invention, comportent le système de couplage conforme à l'invention (TESPT+énamine+DPG) à un taux inférieur à 10% (environ 8,8%) par rapport au poids de charge blanche renforçante totale.

Les tableaux 17 et 18 donnent la formulation des différentes compositions et leurs propriétés avant et après cuisson (40 min à 150°C).

Les résultats du tableau 18 montrent que les compositions conformes à l'invention, comparées à la composition témoin, présentent des viscosités à l'état cru (et donc des propriétés de mise en oeuvre) équivalentes, à l'état cuit des propriétés améliorées : modules M100 et M300 plus élevés, rapports M300/M100 supérieurs, pertes (PH) plus faibles ; ceci illustre une meilleure interaction entre la charge blanche renforçante et l'élastomère, confirmée par les courbes de la figure 8 (courbes C24 et C25 situées au-dessus de la courbe C23 témoin).

<u>J) Essai 10</u>

Cet essai démontre que la présence d'un dérivé guanidique est une caractéristique essentielle dans le système de couplage selon l'invention.

On compare trois compositions de caoutchouc identiques aux différences près qui suivent:

- composition N°26: TESPT (6,4 pce), avec dérivé guanidique mais sans énamine;
- composition N°27 : TESPT (6,4 pce) plus énamine de formule III-0 (0,5 pce soit 7,8% par rapport au poids de TESPT) à laquelle est associé un dérivé guanidique (1,5 pce);
- composition N°28: TESPT (6,4 pce) avec énamine mais sans dérivé guanidique.

Seule la composition N°27 est donc conforme à l'invention ; la composition N°26 est le témoin de cet essai. Les tableaux 19 et 20 donnent la formulation des différentes compositions, leurs propriétés avant et après cuisson (150°C. 40 minutes).

L'étude des différents résultats montre que la composition N°27 conforme à l'invention, comparée à la composition témoin N°26, présente à l'état cru une viscosité Mooney peu différente, un temps de grillage certes plus faible mais satisfaisant, à l'état cuit des propriétés améliorées : modules M100 et M300 nettement plus élevés, rapport M300/M100 supérieur, pertes (PH) inférieures.

Quant à la composition N°28, dépourvue de dérivé guanidique, on note que ces propriétés sont dégradées par rapport à celles de la composition de l'invention, tant à l'état cru qu'après cuisson (viscosité plus élevée, pertes PH plus importantes, niveau de renforcement inférieur d'après les valeurs M100, M300 et rapport M300/M100). Clairement, en l'absence de dérivé guanidique, l'enamine est sans effet sur l'agent de couplage.

<u>K) Essai 11</u>

Cet essai démontre qu'il est en préférable, lors de la fabrication des compositions de l'invention, d'incorporer le dérivé guanidique avec l'élastomère, la charge blanche renforçante et le reste du système de couplage (alkoxysilane polysulfuré et énamine) lors de la première phase de travail thermomécanique (phase non-productive), et non plus tard avec le systeme de vulcanisation (phase productive).

On prépare trois compositions de caoutchouc identiques aux différences près qui suivent:

- composition N°29: TESPT (6,4 pce), avec dérivé guanidique mais sans énamine;
- compositions N°30 et N°31: TESPT (6,4 pce) plus énamine de formule III-2 (0,55 pce soit 8,6% par rapport au poids de TESPT) à laquelle est associé un dérivé guanidique.

Les compositions N°30 et N°31 sont donc conformes à l'invention ; la composition N°29 est le témoin de cet essai. Pour les compositions N°29 et N°30, le dérivé guanidique a été incorporé à la composition avec la charge blanche renforçante et le reste du système de couplage selon l'invention, c'est-à-dire dans le mélangeur interne (phase non-productive). Pour la composition N°31, le dérivé guanidique a été incorporé avec le système de vulcanisation (soufre et sulfénamide), c'est-à-dire dans le mélangeur externe (phase productive).

Les tableaux 21 et 22 donnent la formulation des différentes compositions, leurs propriétés avant et après

cuisson (150°C, 40 minutes). La figure 9 reproduit les courbes de module (en MPa) en fonction de l'allongement (en %) ; ces courbes sont notées C29 à C31 et correspondent respectivement aux compositions de caoutchouc N°29 à N°31.

Les résultats démontrent une fois de plus les effets inattendus de l'invention : la composition N°30 conforme à l'invention, comparée à la composition témoin N°29, présente à l'état cru une viscosité Mooney certes légèrement supérieure mais satisfaisante, à l'état cuit des propriétés améliorées: modules M100 et M300, rapport M300/M100 supérieurs, pertes (PH) inférieures, contrainte à la rupture supérieure. La figure 9 confirme l'effet d'activation de couplage apportée par l'énamine et la diphénylguanidine : pour des allongements de 100% et plus, on enregistre des valeurs de module nettement supérieures pour la composition N°30 conforme à l'invention (courbe C30) comparée à la composition témoin (courbe C29).

Quant à la composition N°31, on note que ces propriétés de renforcement (voir M100 et M300) sont elles aussi sensiblement améliorées par rapport à la composition témoin N°29, tout en étant inférieures à celles de la composition conforme à l'invention N°30 (courbe C31 située sur la figure 9 entre les courbes C29 et C30).

L) Essai 12

L'invention est illustrée ici par des essais de roulage de pneumatiques à carcasse radiale de dimension 175/70 R14, fabriqués de manière connue et qui sont en tout point identiques hormis la constitution de la composition de caoutchouc constitutive de la bande de roulement qui est donnée dans le tableau 23.

La charge blanche renforçante est une silice hautement dispersible. Le couplage (charge blanche/élastomère diénique) est assuré par 8% de TESPT dans le cas de la composition témoin N°32, par 5% seulement de TESPT dans le cas de la composition conforme à l'invention N°33 (% en poids par rapport au poids de charge blanche renforçante), soit une réduction de près de 40% de la quantité d'alkoxysilane polysulfuré.

Dans la composition selon l'invention, ces 5% de TESPT sont activés par une énamine de formule III-0 (0,5 pce, soit 12,5% par rapport au poids d'alkoxysilane polysulfuré) en combinaison avec un dérivé guanidique (1,5 pce). La quantité d'alkoxysilane et d'énamine représente moins de 6% (précisément 5,6%) par rapport au poids de charge blanche renforçante. Quant au système de couplage selon l'invention (TESPT+énamine+DPG), son taux est de manière avantageuse inférieur à 8% (précisément 7,5%) par rapport au poids de charge blanche renforçante.

On soumet les pneumatiques ainsi préparés à un roulage sur route, sur un véhicule de marque Citroën ZX (type break), jusqu'à ce que l'usure due au roulage atteigne les témoins d'usure disposés dans les rainures de la bande de roulement. De manière connue de l'homme du métier, la résistance à l'usure de la composition de caoutchouc, au cours du roulage du pneumatique, est directement corrélée à la qualité du renforcement apporté par la charge renforçante, c'est-à-dire au taux de couplage (charge/élastomère) obtenu. En d'autres termes, la mesure de la résistance à l'usure est un excellent indicateur, sinon le meilleur puisque évalué sur le produit manufacturé final, de la performance du système de couplage utilisé.

On constate après roulage que le pneumatique ayant la bande de roulement conforme à l'invention montre une performance identique à celle du pneumatique témoin, parcourant sensiblement le même kilométrage. Cette résistance à l'usure équivalente, malgré un taux d'agent de couplage fortement réduit, a pu être obtenue grâce à l'activation forte du couplage apportée par les composés énamine et dérivé guanidique en combinaison.

M) Essai 13

Cet essai a pour but de confirmer le résultat de l'essai 12 précédent en présence d'un alkoxysilane polysulfuré autre que le TESPT. On fabrique des pneumatiques à carcasse radiale de dimension 175/70 R14, en tout point identiques hormis la constitution de la composition de caoutchouc constitutive de la bande de roulement qui est donnée dans le tableau 24 (composition témoin N°34, composition conforme à l'invention N°35).

Le couplage (charge blanche/élastomère diénique) est assuré dans les deux cas par 8% d'alkoxysilane polysulfuré de formule II (% en poids par rapport à la quantité de charge blanche renforçante). Dans la composition N°35 selon l'invention, ces 8% de silane sont activés par 0.5 pce d'énamine (soit 12.5% d'énamine par rapport au poids d'alkoxysilane polysulfuré) et 1.5 pce de dérivé guanidique ; dans cette composition, la quantité totale (TESPT+énamine) représente moins de 10% (précisément 8,6%) et le taux de système de couplage (TESPD+énamine+DPG) selon l'invention représente moins de 12% (précisément 10,5%) par rapport au poids de charge blanche renforçante (80 pce).

On procède comme dans l'essai précédent en soumettant les pneumatiques à un roulage sur route, sur un véhicule de marque Citroën Xsara. On constate à la fin de l'essai un gain de 4% en résistance à l'usure pour le pneumatique conforme à l'invention, sans pénalisation des autres performances au roulage.

N) Essai 14

On réalise un nouvel essai de roulage à partir de pneumatiques à carcasse radiale (175/70 R14) en tout point identiques hormis la constitution de la composition de caoutchouc constitutive de la bande de roulement qui est donnée dans le tableau 25 (composition témoin N°36, composition conforme à l'invention N°37).

Le couplage (charge blanche/élastomère diénique) est assuré par 8% de TESPT dans le cas de la composition témoin N°36, par 6% seulement de TESPT dans le cas de la composition conforme à l'invention N°37 (% en poids par rapport à la quantité de charge blanche renforçante). Ceci représente une réduction de près de 25% de la quantité d'alkoxysilane polysulfuré pour la composition N°37 conforme à l'invention ; ses 6% de TESPT sont activés par 0,3 pce seulement d'énamine (soit 6,3% d'énamine par rapport au poids d'alkoxysilane) combiné à 1,5 pce de DPG. Dans la composition de l'invention, la quantité totale (TESPT+énamine) représente moins de 8% (précisément 6,4%) et le taux de système de couplage (TESPD+énamine+DPG) selon l'invention représente avantageusement moins de 10% (précisément 8,3%) par rapport au poids de charge blanche renforçante (80 pce).

On procède comme dans les essais 12 et 13 précédents en soumettant les pneumatiques à un roulage sur route, cette fois sur un véhicule de marque Citroën Xantia. On constate à la fin de l'essai un gain de 3% en résistance à l'usure sur le pneumatique de l'invention, sans pénalisation des autres performances au roulage, par rapport au pneumatique témoin dont la composition de caoutchouc de la bande de roulement contient pourtant un taux de TESPT plus de 30% supérieur.

En conclusion, comme le démontrent les divers essais qui précèdent, le nouveau système de couplage (charge blanche/élastomère diénique) selon l'invention, constitué par l'association d'un alkoxysilane polysulfuré, d'une énamine et d'un dérivé guanidique, offre un compromis de propriétés particulièrement avantageux aux compositions de l'invention, par rapport aux compositions renforcées d'une charge blanche de l'art antérieur.

Dans ce nouveau système de couplage, l'énamine et le dérivé guanidique, utilisés en combinaison comme activateur de couplage, permettent notamment de diminuer de manière très sensible les taux d'alkoxysilanes polysulfurés utilisés habituellement dans les compositions de caoutchouc pour pneumatiques renforcées d'une charge blanche. L'invention permet ainsi de réduire le coût des compositions de caoutchouc, et donc celui des pneumatiques fabriqués à partir de telles compositions.

L'invention permet aussi, si l'on conserve un taux élevé d'alkoxysilane polysulfuré, d'obtenir un niveau de couplage supérieur, et donc d'atteindre un meilleur niveau de renforcement des compositions de caoutchouc par la charge blanche renforçante.

Tableau 1

| Composition N°: | 1 | 2 |
|---|---|---|
| SBR (1) | 75 | 75 |
| BR (2) | 25 | 25 |
| silice (3) | 80 | 80 |
| huile aromatique | 35 | 35 |
| TESPT (Si69) | 6.4 | 6.4 |
| énamine (4) | - | 0.5 |
| ZnO | 2.5 | 2.5 |
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) SBR avec 59.5 % de motifs polybutadiène 1-2 ; 26.5% de styrène ; étendu avec 37.5 % d'huile (Tg = -29 °C) ; exprimé en SBR sec;
(2) BR avec 4.3 % de 1 -2 ; 2,7% de trans ; 93% de cis 1-4 (Tg = - 106°C);
(3) silice Zeosil 1165MP de la société Rhodia;
(4) énamine de formule III-0 (Meramid FC de la société Great Lakes);
(5) N-1,3-diméthylbutyl-N-phényl-para-phénylènediamine;
(6) diphénylguanidine;
(7) N-cyclohexyl-2-benzothiazyl-sulfénamide.

Tableau 2

| Composition N° : | 1 | 2 |
|---|---|---|
| *Propriétés avant cuisson:* | | |
| Mooney (UM) | 78 | 83 |
| T5(min) | 19 | 13 |
| *Propriétés après cuisson:* | | |
| M10(MPa) | 5.2 | 5.0 |
| M100(MPa) | 1.7 | 1.8 |
| M300 (MPa) | 2.2 | 2.6 |
| M300/M100 | 1.3 | 1.4 |
| PH (%) | 27 | 24 |
| contrainte rupture (MPa) | 20.3 | 22.9 |
| allongement rupture (%) | 516 | 495 |

Tableau 3

| Composition N° : | 3 | 4 | 5 | 6 |
|---|---|---|---|---|
| SBR (1) | 75 | 75 | 75 | 75 |
| BR (2) | 25 | 25 | 25 | 25 |
| silice (3) | 80 | 80 | 80 | 80 |
| TESPT (Si69) | 6.4 | 4 | 4 | 4.8 |
| énamine(4) | - | - | 0.5 | 0.25 |
| ZnO | 2.5 | 2.5 | 2.5 | 2.5 |
| acide stéarique | 2 | 2 | 2 | 2 |
| antioxydant (5) | 1.9 | 1.9 | 1.9 | 1.9 |
| DPG (6) | 1.5 | 1.5 | 1.5 | 1.5 |
| soufre | 1.1 | 1.1 | 1.1 | 1.1 |
| CBS (7) | 2 | 2 | 2 | 2 |

(1) à (7) idem tableau 1.

Tableau 4

| Composition N° | 3 | 4 | 5 | 6 |
|---|---|---|---|---|
| *Propriétés avant cuisson:* | | | | |
| Mooney (UM) | 80 | 103 | 92 | 87 |
| T5 (min) | 18 | 16 | 14 | 16 |
| *Propriétés après cuisson:* | | | | |
| M10 (MPa) | 5.6 | 5.9 | 5.8 | 5.8 |
| M100 (MPa) | 1.6 | 1.4 | 1.6 | 1.5 |
| M300 (MPa) | 1.9 | 1.6 | 1.8 | 1.8 |
| M300/M100 | 1.19 | 1.09 | 1.18 | 1.19 |

Tableau 4 (suite)

| Composition N° | 3 | 4 | 5 | 6 |
|---|---|---|---|---|
| *Propriétés après cuisson:* | | | | |
| PH (%) | 30 | 32 | 30 | 31 |
| contrainte rupture (MPa) | 21.7 | 21.7 | 21.7 | 22.2 |
| allongement rupture (%) | 615 | 669 | 605 | 625 |

Tableau 5

| Composition N° : | 7 | 8 | 9 |
|---|---|---|---|
| SBR (1) | 75 | 75 | 75 |
| BR (2) | 25 | 25 | 25 |
| silice (3) | 80 | 80 | 80 |
| huile aromatique | 35 | 35 | 35 |
| TESPT (Si69) | 6.4 | - | - |
| TESPD (Si266) | - | 5.6 | 5.6 |
| énamine (4) | - | - | 0.5 |
| ZnO | 2.5 | 2.5 | 2.5 |
| acide stéarique | 2 | 2 | 2 |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 | 2 | 2 |

(1) à (7) idem tableau 1.

Tableau 6

| Composition N° : | 7 | 8 | 9 |
|---|---|---|---|
| *Propriétés avant cuisson:* | | | |
| Mooney (UM) | 98 | 103 | 94 |
| T5 (min) | 29 | > 30 | 26 |
| *Propriétés après cuisson:* | | | |
| M10 (MPa) | 4.5 | 4.4 | 4.3 |
| M100 (MPa) | 1.4 | 1.1 | 1.3 |
| M300 (MPa) | 1.8 | 1.2 | 1.7 |
| M300/M100 | 1.29 | 1.05 | 1.28 |
| PH(%) | 26 | 32 | 26 |
| contrainte rupture (MPa) | 24.3 | 22.3 | 25.7 |
| allongement rupture (%) | 647 | 730 | 685 |

Tableau 7

| Composition N°: | 10 | 11 | 12 |
|---|---|---|---|
| SBR (1) | 75 | 75 | 75 |
| BR (2) | 25 | 25 | 25 |
| silice (3) | 80 | 80 | 80 |
| huile aromatique | 35 | 35 | 35 |
| TESPT (Si69) | 6.4 | 6.4 | 6.4 |
| énamine (4) | - | 0.5 | - |
| énamine (4') | - | - | 0.55 |
| ZnO | 2.5 | 2.5 | 2.5 |
| acide stéarique | 2 | 2 | 2 |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 2 2 | | |

(1) à (3) idem tableau 1;
(4) énamine de formule III-1 (1-pyrrolidino-1-cyclopentène; Aldrich);
(4') énamine de formule III-2 (1-pyrrolidino-1-cyclohexène ; Aldrich);
(5) à (7) idem tableau 1.

Tableau 8

| Composition N° : | 10 | 11 | 12 |
|---|---|---|---|
| *Propriétés avant cuisson:* | | | |
| Mooney (UM) | 91 | 95 | 95 |
| *Propriétés après cuisson:* | | | |
| M10 (MPa) | 5.6 | 5.6 | 5.7 |
| M100 (MPa) | 1.8 | 2.0 | 1.9 |
| M300 (MPa) | 2.2 | 2.7 | 2.6 |
| M300/M100 | 1.23 | 1.36 | 1.32 |
| PH (%) | 30 | 27 | 28 |
| contrainte rupture (MPa) | 22.2 | 23.1 | 22.6 |
| allongement rupture (%) | 561 | 504 | 502 |

Tableau 9

| Composition N° : | 13 | 14 | 15 | 16 |
|---|---|---|---|---|
| SBR (1) | 75 | 75 | 75 | 75 |
| BR (2) | 25 | 25 | 25 | 25 |
| silice (3) | 80 | 80 | 80 | 80 |
| TESPT (Si69) | 6.4 | 4 | 4 | 4 |
| énamine (4) | - | - | 0.5 5 | - |
| énamine (4') | - | - | - | 0.55 |
| ZnO | 2.5 | 2.5 | 2.5 | 2.5 |
| acide stéarique | 2 | 2 | 2 | 2 |

(1) à (7) idem tableau 7.

Tableau 9 (suite)

| Composition N° : | 13 | 14 | 15 | 16 |
|---|---|---|---|---|
| antioxydant (5) | 1.9 | 1.9 | 1.9 | 1.9 |
| DPG (6) | 1.5 | 1.5 | 1.5 | 1.5 |
| soufre | 1.1 | 1.1 | 1.1 | 1.1 |
| CBS (7) | 2 | 2 | 2 | 2 |

(1) à (7) idem tableau 7.

Tableau 10

| Composition N° | 13 | 14 | 15 | 16 |
|---|---|---|---|---|
| *Propriétés avant cuisson:* | | | | |
| Mooney (UM) | 91 | 116 | 113 | 108 |
| *Propriétés après cuisson:* | | | | |
| M10(MPa) | 5.6 | 5.5 | 5.8 | 5.7 |
| M100(MPa) | 1.8 | 1.5 | 1.7 | 1.6 |
| M300(MPa) | 2.2 | 1.6 | 2.2 | 2.0 |
| M300/M100 | 1.23 | 1.06 | 1.25 | 1.21 |
| PH(%) | 30 | 36 | 32 | 32 |
| contrainte rupture (MPa) | 22.2 | 22.2 | 23 | 23.7 |
| allongement rupture (%) | 561 | 712 | 574 | 624 |

Tableau 11

| Composition N° : | 17 | 18 |
|---|---|---|
| SBR (1) | 75 | 75 |
| BR (2) | 25 | 25 |
| silice (3) | 80 | 80 |
| huile aromatique | 35 | 35 |
| TESPD (Si266) | 5.6 | 5.6 |
| énamine (4) | - | 0.5 |
| ZnO | 2.5 | 2.5 |
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) à (7) idem tableau 7.

Tableau 12

| Composition N° : | 17 | 18 |
|---|---|---|
| *Propriétés avant cuisson:* | | |
| Mooney (UM) | 92 | 80 |
| *Propriétés après cuisson:* | | |
| M10 (MPa) | 4.4 | 4.6 |
| M100 (MPa) | 1.2 | 1.3 |
| M300 (MPa) | 1.3 | 1.4 |
| M300/M100 | 1.02 | 1.08 |
| PH (%) | 37 | 34 |
| contrainte rupture (MPa) | 21 | 22.4 |
| allongement rupture (%) | 750 | 734 |

Tableau 13

| Composition N° : | 19 | 20 |
|---|---|---|
| SBR (1) | 75 | 75 |
| BR (2) | 25 | 25 |
| silice (3) | 80 | 80 |
| huile aromatique | 35 | 35 |
| silane(8) | 6.4 | 6.4 |
| énamine (4) | - | 0.5 |
| ZnO | 2.5 | 2.5 |
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) à (7) idem tableau 1;
(8) silane formule (II).

Tableau 14

| Composition N° : | 19 | 20 |
|---|---|---|
| *Propriétés avant cuisson:* | | |
| Mooney (UM) | 90 | 91 |
| T5 (min) | 16 | 12 |
| *Propriétés après cuisson:* | | |
| M10 (MPa) | 5.6 | 5.8 |
| M100 (MPa) | 1.5 | 1.8 |
| M300 (MPa) | 1.7 | 2.3 |
| M300/M100 | 1.13 | 1.27 |

Tableau 14 (suite)

| Composition N° : | 19 | 20 |
|---|---|---|
| *Propriétés après cuisson:* | | |
| PH (%) | 33 | 28.5 |
| contrainte rupture (MPa) | 20.4 | 20.1 |
| allongement rupture (%) | 675 | 540 |

Tableau 15

| Composition N°: | 21 | 22 |
|---|---|---|
| SBR (1) | 75 | 75 |
| BR (2) | 25 | 25 |
| silice (3) | 49.5 | 49.5 |
| alumine (3') | 49.5 | 49.5 |
| huile aromatique | 35 | 35 |
| TESPT (Si69) | 6.5 | 6.5 |
| énamine (4) | - | 0.5 |
| ZnO | 2.5 | 2.5 |
| acide stéarique | 2 | 2 |
| antioxydant (5) | 1.9 | 1.9 |
| DPG (6) | 0.9 | 0.9 |
| soufre | 1.1 | 1.1 |
| CBS (7) | 2 | 2 |

(1) à (7) idem tableau 1;
(3') alumine CR125 de la société Baïkowski

Tableau 16

| Composition N°: | 21 | 22 |
|---|---|---|
| *Propriétés avant cuisson:* | | |
| Mooney (UM) | 50 | 52 |
| T5 (min) | 14 | 12 |
| *Propriétés après cuisson:* | | |
| M10 (MPa) | 5.1 | 5.1 |
| M100 (MPa) | 1.7 | 1.8 |
| M300 (MPa) | 2.1 | 2.2 |
| M300/M100 | 1.18 | 1.23 |
| PH (%) | 31 | 29 |
| contrainte rupture (MPa) | 21.7 | 23.2 |
| allongement rupture (%) | 591 | 609 |

Tableau 17

| Composition N°: | 23 | 24 | 25 |
|---|---|---|---|
| SBR (1) | 75 | 75 | 75 |
| BR (2) | 25 | 25 | 25 |
| silice(3) | 62 | 62 | 62 |
| alumine (3') | 26 | 26 | 26 |
| huile aromatique | 35 | 35 | 35 |
| TESPT (Si69) | 6.0 | 6.0 | 6.0 |
| énamine (4) | - | 0.5 | - |
| énamine (4') | - | - | 0.55 |
| ZnO | 2.5 | 2.5 | 2.5 |
| acide stéarique | 2 | 2 | 2 |
| antioxydant(5) | 1.9 | 1.9 | 1.9 |
| DPG (6) | 1.2 | 1.2 | 1.2 |
| soufre | 1.1 | 1.1 | 1.1 |
| CBS (7) | 2 | 2 | 2 |

(1) à (7) idem tableau 1;
(3') alumine APA-100RDX de la société Condéa;
(4') idem tableau 7 (énamine de formule III-2).

Tableau 18

| Composition N°: | 23 | 24 | 25 |
|---|---|---|---|
| *Propriétés avant cuisson:* | | | |
| Mooney (UM) | 74 | 74 | 77 |
| *Propriétés après cuisson:* | | | |
| M10 (MPa) | 4.7 | 4.8 | 4.2 |
| M100 (MPa) | 1.6 | 1.9 | 1.7 |
| M300 (MPa) | 2.0 | 2.4 | 2.1 |
| M300/M100 | 1.20 | 1.28 | 1.30 |
| PH (%) | 28 | 25 | 26 |
| contrainte rupture (MPa) | 20.7 | 20.8 | 21.3 |
| allongement rupture (%) | 587 | 539 | 560 |

Tableau 19

| Composition N°: | 26 | 27 | 28 |
|---|---|---|---|
| SBR (1) | 75 | 75 | 75 |
| BR (2) | 25 | 25 | 25 |
| silice (3) | 80 | 80 | 80 |
| huile aromatique | 35 | 35 | 35 |
| TESPT (Si69) | 6.4 | 6.4 | 6.4 |
| énamine (4) | - | 0.5 | 0.5 |
| ZnO | 2.5 | 2.5 | 2.5 |

(1) à (7) idem tableau 1.

Tableau 19 (suite)

| Composition N°: | 26 | 27 | 28 |
|---|---|---|---|
| acide stéarique | 2 | 2 | 2 |
| antioxydant (5) | 1.9 | 1.9 | 1.9 |
| DPG (6) | 1.5 | 1.5 | - |
| soufre | 1.1 | 1.1 | 1.1 |
| CBS (7) | 2 | 2 | 2 |

(1) à (7) idem tableau 1.

Tableau 20

| Composition N° : | 26 | 27 | 28 |
|---|---|---|---|
| *Propriétés avant cuisson:* | | | |
| Mooney (UM) | 84 | 87 | 98 |
| T5 (min) | 20 | 12 | 20 |
| *Propriétés après cuisson:* | | | |
| M10 (MPa) | 5.7 | 6.1 | 4.7 |
| M100 (MPa) | 1.7 | 2.0 | 1.6 |
| M300 (MPa) | 2.0 | 2.5 | 1.8 |
| M300/M100 | 1.20 | 1.25 | 1.10 |
| PH(%) | 30 | 27 | 32 |
| contrainte rupture (MPa) | 19.3 | 19.5 | 20.9 |
| allongement rupture (%) | 532 | 473 | 663 |

Tableau 21

| Composition N° : | 29 | 30 | 31 |
|---|---|---|---|
| SBR (1) | 75 | 75 | 75 |
| BR (2) | 25 | 25 | 25 |
| silice (3) | 80 | 80 | 80 |
| huile aromatique | 35 | 35 | 35 |
| TESPT (Si69) | 6.4 | 6.4 | 6.4 |
| énamine (4') | - | 0.55 | 0.55 |
| ZnO | 2.5 | 2.5 | 2.5 |
| acide stéarique | 2 | 2 | 2 |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 | 2 | 2 |

(1) à (3), (4'), (5) à (7) idem tableau 7.

Tableau 22

| Composition N° : | 29 | 30 | 31 |
|---|---|---|---|
| *Propriétés avant cuisson:* | | | |
| Mooney (UM) | 84 | 90 | 88 |
| *Propriétés après cuisson:* | | | |
| M10 (MPa) | 5.6 | 5.3 | 5.5 |
| M100 (MPa) | 1.7 | 1.8 | 1.8 |
| M300 (MPa) | 2.1 | 2.4 | 2.2 |
| M300/M100 | 1.20 | 1.31 | 1.22 |
| PH (%) | 29.5 | 27 | 29.5 |
| contrainte rupture (MPa) | 19.4 | 22 | 22.1 |
| allongement rupture (%) | 533 | 509 | 536 |

Tableau 23

| Composition N°: | 32 | 33 |
|---|---|---|
| SBR(1) | 75 | 75 |
| BR (2) | 25 | 25 |
| silice (3) | 80 | 80 |
| huile aromatique | 34 | 34 |
| TESPT (Si69) | 6.4 | 4 |
| énamine (4) | - | 0.5 |
| ZnO | 2.5 | 2.5 |
| acide stéarique | 2 | 2 |
| paraffine (9) | 1.5 | 1.5 |
| antioxydant (5) | 1.9 | 1.9 |
| DPG (6) | 1.5 | 1.5 |
| soufre | 1.1 | 1.1 |
| CBS (7) | 2 | 2 |

(1) à (7) idem tableau 1;
(9) mélange de cires antiozone macro- et microcristallines.

Tableau 24

| Composition N° : | 34 | 35 |
|---|---|---|
| SBR (1) | 75 | 75 |
| BR(2) | 25 | 25 |
| silice (3) | 80 | 80 |
| huile aromatique | 34 | 34 |
| silane (8) | 6.4 | 6.4 |
| énamine (4) | - | 0.5 |
| ZnO | 2.5 | 2.5 |
| paraffine(9) | 1.5 | 1.5 |

(1) à (8) idem tableau 13;
(9) idem tableau 23.

Tableau 24 (suite)

| Composition N° : | 34 | 35 |
|---|---|---|
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) à (8) idem tableau 13;

Tableau 25

| Composition N° : | 36 | 37 |
|---|---|---|
| SBR (1) | 75 | 75 |
| BR (2) | 25 | 25 |
| silice (3) | 80 | 80 |
| huile aromatique | 34 | 34 |
| TESPT (Si69) | 6.4 | 4.8 |
| énamine (4) | - | 0.3 |
| ZnO | 2.5 | 2.5 |
| paraffine (9) | 1.5 | 1.5 |
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) à (9) idem tableau 23.

## Revendications

**1.** Composition de caoutchouc utilisable pour la fabrication de pneumatiques, comportant au moins (i) un élastomère diénique, (ii) une charge blanche à titre de charge renforçante, (iii) un alkoxysilane polysulfuré à titre d'agent de couplage (charge blanche/élastomère diénique) auquel sont associés (iv) une énamine et (v) un dérivé guanidique.

**2.** Composition de caoutchouc selon la revendication 1, dans laquelle le dérivé guanidique est la diphénylguanidine.

**3.** Composition de caoutchouc selon l'une quelconque des revendications 1 ou 2, dans laquelle l'alkoxysilane polysulfuré est un polysulfure de bis-alkoxyl($C_1$-$C_4$)silylpropyle.

**4.** Composition de caoutchouc selon la revendication 3, dans laquelle l'alkoxysilane polysulfuré est le tétrasulfure de bis 3-triéthoxysilylpropyle.

**5.** Composition de caoutchouc selon la revendication 3, dans laquelle l'alkoxysilane polysulfuré est le disulfure de bis 3-triéthoxysilylpropyle.

**6.** Composition de caoutchouc selon l'une quelconque des revendications 1 ou 2, dans laquelle l'alkoxysilane polysulfuré répond à la formule:

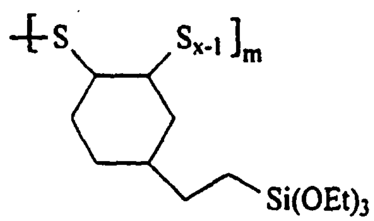

dans laquelle x = 1 à 8, m = 1 à 200, OEt représente le radical éthoxyle.

7. Composition de caoutchouc selon l'une quelconque des revendications 1 à 6, dans laquelle la quantité d'alkoxysilane polysulfuré représente moins de 8% par rapport au poids de charge blanche renforçante.

8. Composition de caoutchouc selon la revendication 7, dans laquelle la quantité d'alkoxysilane polysulfuré représente moins de 6% par rapport au poids de charge blanche renforçante.

9. Composition de caoutchouc selon l'une quelconque des revendications 1 à 8, dans laquelle l'énamine a pour formule (III-0):

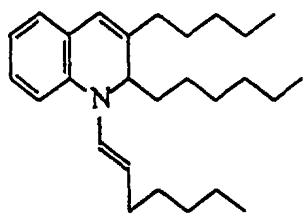

10. Composition de caoutchouc selon l'une quelconque des revendications 1 à 8, dans laquelle l'énamine est choisie parmi les énamines dérivées de la dibutylamine, de l'aniline, de la pipéridine ou de la pyrrolidine.

11. Composition de caoutchouc selon la revendication 10, dans laquelle l'énamine a pour formule une des formules (III-1) ou (III-2):

(III-1)

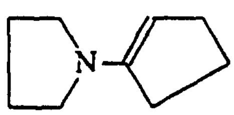

(III-2)

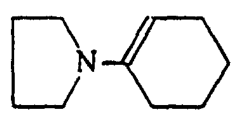

12. Composition de caoutchouc selon l'une quelconque des revendications 1 à 11, dans laquelle la quantité d'énamine représente entre 1% et 25% par rapport au poids d'alkoxysilane polysulfuré.

13. Composition de caoutchouc selon la revendication 12, dans laquelle la quantité d'énamine représente entre 3% et 17.5% par rapport au poids d'alkoxysilane polysulfuré.

14. Composition de caoutchouc selon l'une quelconque des revendications 1 à 13, dans laquelle la quantité totale d'alkoxysilane polysulfuré et d'énamine représente moins de 10% par rapport au poids de charge blanche renforçante.

15. Composition de caoutchouc selon la revendication 14, dans laquelle la quantité totale d'alkoxysilane polysulfuré et d'énamine représente moins de 8% par rapport au poids de charge blanche renforçante.

**16.** Composition de caoutchouc selon l'une quelconque des revendications 1 à 15, dans laquelle la quantité de dérivé guanidique représente entre 0,5 et 4% par rapport au poids de charge blanche renforçante.

**17.** Composition de caoutchouc selon l'une quelconque des revendications 1 à 16, dans laquelle la quantité totale d'alkoxysilane polysulfuré, d'énamine et de dérivé guanidique représente entre 1% et 20% par rapport au poids de charge blanche renforçante.

**18.** Composition de caoutchouc selon la revendication 17, dans laquelle la quantité totale d'alkoxysilane polysulfuré, d'énamine et de dérivé guanidique représente entre 5% et 15% par rapport au poids de charge blanche renforçante.

**19.** Composition de caoutchouc selon la revendication 18, dans laquelle la quantité totale d'alkoxysilane polysulfuré, d'énamine et de dérivé guanidique représente moins de 12% par rapport au poids de charge blanche renforçante.

**20.** Composition de caoutchouc selon la revendication 19, dans laquelle la quantité totale d'alkoxysilane polysulfuré, d'énamine et de dérivé guanidique représente moins de 10% par rapport au poids de charge blanche renforçante.

**21.** Composition de caoutchouc selon l'une quelconque des revendications 1 à 20, dans laquelle la charge blanche renforçante est majoritairement de la silice.

**22.** Composition de caoutchouc selon l'une quelconque des revendications 1 à 21, dans laquelle la charge blanche renforçante constitue la totalité de la charge renforçante.

**23.** Composition de caoutchouc selon l'une quelconque des revendications 1 à 21, dans laquelle la charge blanche renforçante est utilisée en mélange avec du noir de carbone.

**24.** Composition de caoutchouc selon l'une quelconque des revendications 1 à 23, dans laquelle l'élastomère diénique est choisi dans le groupe constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

**25.** Composition de caoutchouc selon la revendication 24, dans laquelle l'élasiomère diénique est un copolymère de butadiène-styrène éventuellement utilisé en mélange avec un polybutadiène.

**26.** Composition de caoutchouc selon la revendication 25, dans laquelle l'élastomère diénique est un copolymère de butadiène-styrène préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C, ce copolymère de butadiène-styrène étant éventuellement utilisé en mélange avec un polybutadiène possédant de préférence plus de 90% de liaisons cis-1,4.

**27.** Procédé pour préparer une composition de caoutchouc selon l'une quelconque des revendications 1 à 26, **caractérisé en ce qu'**on incorpore par malaxage à au moins (i) un élastomère diénique, au moins (ii) une charge blanche à titre de charge renforçante, (iii) un alkoxysilane polysulfuré à titre d'agent de couplage (charge blanche/élastomère diénique), (iv) une énamine et (v) un dérivé guanidique.

**28.** Procédé selon la revendication 27, **caractérisé en ce que**, en une ou plusieurs étapes, on incorpore à (i) l'élastomère diénique, au moins (ii) la charge blanche renforçante, (iii) l'alkoxysilane polysulfuré, (iv) l'énamine et (v) le dérivé guanidique, et **en ce qu'**on malaxe thermomécaniquement le tout jusqu'à atteindre une température maximale comprise entre 130°C et 200°C.

**29.** Procédé selon la revendication 28, **caractérisé en ce que** la température maximale de malaxage est comprise entre 145°C et 180°C.

**30.** Utilisation d'une composition de caoutchouc conforme à l'une quelconque des revendications 1 à 26, pour la fabrication de pneumatiques ou de produits semi-finis en caoutchouc destinés aux pneumatiques, ces produits semi-finis étant choisis dans le groupe constitué par les bandes de roulement, les sous-couches de ces bandes de roulement, les nappes sommet, les flancs, les nappes carcasse, les talons, les protecteurs, les chambres à air ou les gommes intérieures étanches pour pneumatique sans chambre.

**31.** Pneumatique comportant une composition de caoutchouc conforme à l'une quelconque des revendications 1 à 26.

**32.** Produit semi-fini en caoutchouc pour pneumatique, comportant une composition de caoutchouc conforme à l'une quelconque des revendications 1 à 26, ce produit semi-fini étant choisi en particulier dans le groupe constitué par les bandes de roulement, les sous-couches de ces bandes de roulement, les nappes sommet, les flancs, les nappes carcasse, les talons, les protecteurs, les chambres à air ou les gommes intérieures étanches pour pneu sans chambre.

**33.** Produit semi-fini selon la revendication 32, consistant en une bande de roulement.

**34.** Bande de roulement selon la revendication 33, **caractérisée en ce qu'**elle est à base d'une composition de caoutchouc selon l'une quelconque des revendications 24 à 26.

**35.** Système de couplage (charge blanche/élastomère diénique) pour composition de caoutchouc à base d'élastomère diénique renforcée par une charge blanche, utilisable pour la fabrication de pneumatiques, **caractérisé en ce qu'**il est constitué par l'association d'un alkoxysilane polysulfuré, d'une énamine et d'un dérivé guanidique.

**36.** Système de couplage selon la revendication 35, dans lequel l'alkoxysilane polysulfuré représente plus de 50% en poids du système de couplage.

**37.** Système de couplage selon les revendications 35 ou 36, dans lequel le dérivé guanidique est la diphénylguanidine.

**38.** Système de couplage selon l'une quelconque des revendications 35 à 37, dans lequel l'alkoxysilane polysulfuré est un polysulfuré de bis-alkoxyl($C_1$-$C_4$)silylpropyle.

**39.** Système de couplage selon la revendication 38, dans lequel l'alkoxysilane polysulfuré est le tétrasulfure de bis 3-triéthoxysilylpropyle.

**40.** Système de couplage selon la revendication 38, dans lequel l'alkoxysilane polysulfuré est le disulfure de bis 3-triéthoxysilylpropyle.

**41.** Système de couplage selon l'une quelconque des revendications 35 à 37, dans lequel l'alkoxysilane polysulfuré répond à la formule:

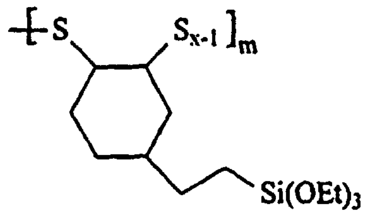

dans laquelle x = 1 à 8, m = 1 à 200, OEt représente le radical éthoxyle.

**42.** Système de couplage selon l'une quelconque des revendications 35 à 41, dans lequel l'énamine a pour formule (III-0):

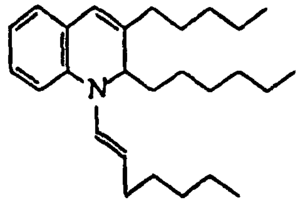

**43.** Système de couplage selon l'une quelconque des revendications 35 à 41, dans lequel l'énamine est choisie parmi

les énamines dérivées de la dibutylamine, de l'aniline, de la pipéridine ou de la pyrrolidine.

**44.** Système de couplage selon la revendication 43, dans lequel l'énamine a pour formule une des formulés (III-1) ou (III-2):

(III-1)

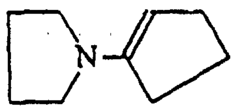

(III-2)

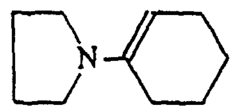

**45.** Utilisation d'un système de couplage selon l'une quelconque des revendications 35 à 44, pour le couplage d'une charge blanche renforçante et d'un élastomère diénique dans une composition de caoutchouc utilisable pour la fabrication de pneumatiques.

**46.** Utilisation en combinaison d'une énamine et d'un dérivé guanidique, dans une composition de caoutchouc renforcée d'une charge blanche utilisable pour la fabrication de pneumatiques, pour activer la fonction de couplage (charge blanche/élastomère diénique) d'un alkoxysilane polysulfuré.

**47.** Utilisation selon la revendication 46, dans laquelle l'alkoxysilane polysulfuré est un polysulfure de bis-alkoxyl ($C_1$-$C_4$)silylpropyle.

**48.** Utilisation selon la revendication 47, dans laquelle l'alkoxysilane polysulfuré est le tétrasulfure de bis 3-triéthoxysilylpropyle.

**49.** Utilisation selon la revendication 47, dans laquelle l'alkoxysilane polysulfuré est le disulfure de bis 3-triéthoxysilylpropyle.

**50.** Utilisation selon la revendication 46, dans laquelle l'alkoxysilane polysulfuré répond à la formule:

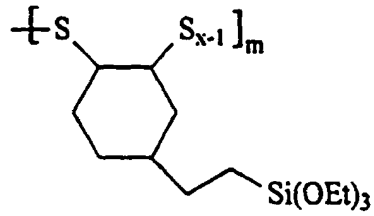

dans laquelle x = 1 à 8, m = 1 à 200, OEt représente le radical éthoxyle.

**51.** Utilisation selon l'une quelconque des revendications 46 à 50, dans laquelle l'énamine a pour formule (III-0):

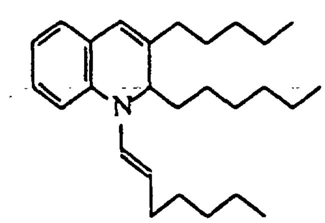

**52.** Utilisation selon l'une quelconque des revendications 46 à 50, dans laquelle l'énamine est choisie parmi les énamines dérivées de la dibutylamine, de l'aniline, de la pipéridine ou de la pyrrolidine.

**53.** Utilisation selon la revendication 52, dans laquelle l'énamine a pour formule une des formules (III-1) ou (III-2):

(III-1)

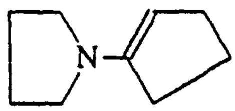

(III-2)

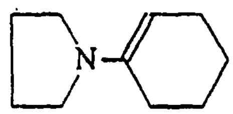

**54.** Utilisation selon l'une quelconque des revendications 46 à 53, **caractérisée en ce que** le dérivé guanidique est la diphénylguanidine.

**Patentansprüche**

**1.** Kautschukzusammensetzung, die für die Herstellung von Luftreifen verwendbar ist, die mindestens enthält: (i) ein Dien-Elastomer, (ii) einen weißen Füllstoff als verstärkenden Füllstoff, (iii) ein Alkoxysilanpolysulfid als Kupplungsmittel (weißer Füllstoff/Dien-Elastomer), mit dem (iv) ein Enamin und (v) ein Guanidin-Derivat kombiniert sind.

**2.** Kautschukzusammensetzung nach Anspruch 1, wobei es sich bei dem Guanidin-Derivat um Diphenylguanidin handelt.

**3.** Kautschukzusammensetzung nach einem der Ansprüche 1 und 2, wobei das Alkoxysilanpolysulfid ein Bis-($C_1$-$C_4$)-alkoxysilylpropylpolysulfid ist.

**4.** Kautschukzusammensetzung nach Anspruch 3, wobei das Alkoxysilanpolysulfid das Bis-3-triethoxysilylpropyltetrasulfid ist.

**5.** Kautschukzusammensetzung nach Anspruch 3, wobei das Alkoxysilanpolysulfid das Bis-3-triethoxysilylpropyldisulfid ist.

**6.** Kautschukzusammensetzung nach einem der Ansprüche 1 und 2, wobei das Alkoxysilanpolysulfid der Formel

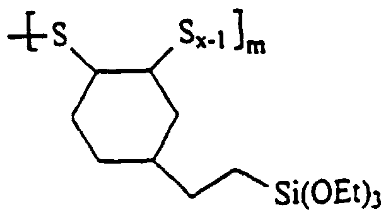

entspricht, in der x = 1 bis 8, m = 1 bis 200 ist und OEt Ethoxy bedeutet.

**7.** Kautschukzusammensetzung nach einem der Ansprüche 1 bis 6, wobei der Mengenanteil des Alkoxysilanpolysulfids kleiner als 8 %, bezogen auf das Gewicht der verstärkenden weißen Füllstoffs, ist.

**8.** Kautschukzusammensetzung nach Anspruch 7, wobei der Mengenanteil des Alkoxysilanpolysulfids kleiner als 6 %, bezogen auf das Gewicht der verstärkenden weißen Füllstoffs, ist.

**9.** Kautschukzusammensetzung nach einem der Ansprüche 1 bis 8, wobei das Enamin der Formel (III-0)

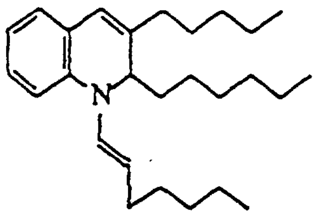

(III-0)

entspricht.

**10.** Kautschukzusammensetzung nach einem der Ansprüche 1 bis 8, wobei das Enamin unter den Enaminen ausgewählt ist, die von Dibutylamin, Anilin, Piperidin oder Pyrolidin abgeleitet sind.

**11.** Kautschukzusammensetzung nach Anspruch 10, wobei das Enamin der Formel (III-1) oder der Formel (III-2)

(III-1)

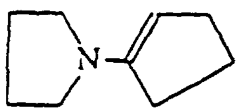

(III-2)

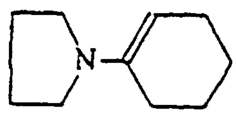

entspricht.

**12.** Kautschukzusammensetzung nach einem der Ansprüche 1 bis 11, wobei der Mengenanteil des Enamins im Bereich von 1 bis 25 %, bezogen auf das Gewicht des Alkoxysilanpolysulfids, liegt.

**13.** Kautschukzusammensetzung nach Anspruch 12, wobei der Mengenanteil des Enamins im Bereich von 3 bis 17,5 %, bezogen auf das Gewicht des Alkoxysilanpolysulfids, liegt.

**14.** Kautschukzusammensetzung nach einem der Ansprüche 1 bis 13, wobei die Gesamtmenge an Alkoxysilanpolysulfid und Enamin weniger als 10 %, bezogen auf das Gewicht des verstärkenden weißen Füllstoffs, beträgt.

**15.** Kautschukzusammensetzung nach Anspruch 14, wobei die Gesamtmenge an Alkoxysilanpolysulfid und Enamin weniger als 8 %, bezogen auf das Gewicht des verstärkenden weißen Füllstoffs, beträgt.

**16.** Kautschukzusammensetzung nach einem der Ansprüche 1 bis 15, wobei der Mengenanteil des Guanidin-Derivats im Bereich von 0,5 bis 4 %, bezogen auf das Gewicht des verstärkenden weißen Füllstoffs, liegt.

**17.** Kautschukzusammensetzung nach einem der Ansprüche 1 bis 16, wobei die Gesamtmenge an Alkoxysilanpolysulfid, Enamin und Guanidin-Derivat im Bereich von 1 bis 20 %, bezogen auf das Gewicht des verstärkenden weißen Füllstoffs, liegt.

**18.** Kautschukzusammensetzung nach Anspruch 17, wobei die Gesamtmenge an Alkoxysilanpolysulfid, Enamin und Guanidin-Derivat im Bereich von 5 bis 15 %, bezogen auf das Gewicht des verstärkenden weißen Füllstoffs, liegt.

**19.** Kautschukzusammensetzung nach Anspruch 18, wobei die Gesamtmenge an Alkoxysilanpolysulfid, Enamin und Guanidin-Derivat unter 12 %, bezogen auf das Gewicht des verstärkenden weißen Füllstoffs, liegt.

**20.** Kautschukzusammensetzung nach Anspruch 19, wobei die Gesamtmenge an Alkoxysilanpolysulfid, Enamin und Guanidin-Derivat unter 10 %, bezogen auf das Gewicht des verstärkenden weißen Füllstoffs, liegt.

**21.** Kautschukzusammensetzung nach einem der Ansprüche 1 bis 20, wobei der verstärkende weiße Füllstoff überwiegend aus Kieselsäure besteht.

**22.** Kautschukzusammensetzung nach einem der Ansprüche 1 bis 21, wobei der verstärkende Füllstoff vollständig aus dem verstärkenden weißen Füllstoff besteht.

**23.** Kautschukzusammensetzung nach einem der Ansprüche 1 bis 21, wobei der verstärkende weiße Füllstoff im Gemisch mit Ruß verwendet wird.

**24.** Kautschukzusammensetzung nach einem der Ansprüche 1 bis 23, wobei das Dien-Elastomer unter den Polybutadienen, den Polyisoprenen und Naturkautschuk, den Butadien-Styrol-Copolymeren, den Butadien-Isopren-Copolymeren, den Isopren-Styrol-Copolymeren, den Butadien-Styrol-Isopren-Copolymeren und den Gemischen aus zwei oder mehreren dieser Verbindungen ausgewählt ist.

**25.** Kautschukzusammensetzung nach Anspruch 24, wobei das Dien-Elastomer ein Butadien-Styrol-Copolymer ist, das gegebenenfalls im Gemisch mit einem Polybutadien verwendet wird.

**26.** Kautschukzusammensetzung nach Anspruch 25, wobei das Dien-Elastomer ein Butadien-Styrol-Copolymer ist, das in Lösung hergestellt wird und einen Styrolgehalt von 20 bis 30 Gew.-%, einen Anteil an Vinylbindungen im Butadienteil von 15 bis 65 %, einen Anteil an *trans*-1,4-Bindungen im Bereich von 20 bis 75 % und eine Glasübergangstemperatur im Bereich von -20 bis -55 °C aufweist wobei dieses Butadien-Styrol-Copolymer gegebenenfalls im Gemisch mit einem Polybutadien verwendet wird, das vorzugsweise mehr als 90 % *cis*-1,4-Bindungen besitzt.

**27.** Verfahren zur Herstellung einer Kautschukzusammensetzung nach einem der Ansprüche 1 bis 26, **dadurch gekennzeichnet, daß** durch Kneten (i) in mindestens ein Dien-Elastomer mindestens (ii) ein weißer Füllstoff als verstärkender Füllstoff, (iii) ein Alkoxysilanpolysulfid als Kupplungsmittel (weißer Füllstoff/Dien-Elastomer), (iv) ein Enamin und (v) ein Guanidin-Derivat eingebracht werden.

**28.** Verfahren nach Anspruch 27, **dadurch gekennzeichnet, daß** in einem oder mehreren Schritten zu dem (i) Dien-Elastomer mindestens (ii) der verstärkende weiße Füllstoff, (iii) das Alkoxysilanpolysulfid, (iv) das Enamin und (v) das Guanidin-Derivat gegeben werden und daß das Ganze thermomechanisch geknetet wird, bis eine Maximaltemperatur im Bereich von 130 bis 200 °C erreicht wird.

**29.** Verfahren nach Anspruch 28, **dadurch gekennzeichnet, daß** Maximaltemperatur beim Kneten im Bereich von 145 bis 180 °C liegt.

**30.** Verwendung einer Kautschukzusammensetzung nach einem der Ansprüche 1 bis 26 für die Herstellung von Luftreifen oder Halbfertigprodukten aus Kautschuk, die für Luftreifen vorgesehen sind, wobei diese Halbfertigprodukte unter den Laufstreifen, den Unterschichten für diese Laufstreifen, den Scheitellagen, den Seitenwänden, den Karkasslagen, den Wülsten, den Protektoren, den Schläuchen und den dichten Innengummis für schlauchlose Reifen ausgewählt sind.

**31.** Luftreifen, der eine Kautschukzusammensetzung nach einem der Ansprüche 1 bis 26 enthält.

**32.** Halbfertigprodukt aus Kautschuk für Luftreifen, das eine Kautschukzusammensetzung nach einem der Ansprüche 1 bis 26 enthält, wobei dieses Halbfertigprodukt unter den Laufstreifen, den Unterschichten für diese Laufstreifen, den Scheitellagen, den Seitenwänden, den Karkasslagen, den Wülsten, den Protektoren, den Schläuchen und den dichten Innengummis für schlauchlose Reifen ausgewählt ist.

**33.** Halbfertigprodukt nach Anspruch 32, das aus einem Laufstreifen besteht.

**34.** Laufstreifen nach Anspruch 33, **dadurch gekennzeichnet, daß** er auf einer Kautschukzusammensetzung nach einem der Ansprüche 24 bis 26 basiert.

**35.** Kupplungssystem (weißer Füllstoff/Dien-Elastomer) für Kautschukzusammensetzung auf Dien-Elastomer-Basis, die mit einem weißen Füllstoff verstärkt ist, verwendbar für die Herstellung von Luftreifen, **dadurch gekennzeichnet, daß** es aus der Kombination eines Alkoxysilanpolysulfids, eines Enamins und eines Guanidin-Derivats besteht.

**36.** Kupplungssystem nach Anspruch 35, wobei das Alkoxysilanpolysulfid mehr als 50 Gew.-% des Kupplungssystems ausmacht.

**37.** Kupplungssystem nach Anspruch 35 oder 36, wobei es sich bei dem Guanidin-Derivat um Diphenylguanidin handelt.

**38.** Kupplungssystem nach einem der Ansprüche 35 bis 37, wobei es sich bei dem Alkoxysilanpolysulfid um ein Bis-($C_1$-$C_4$)-alkoxysilylpropylpolysulfid handelt.

**39.** Kupplungssystem nach Anspruch 38, wobei es sich bei dem Alkoxysilanpolysulfid um Bis-3-triethoxysilylpropyltetrasulfid handelt.

**40.** Kupplungssystem nach Anspruch 38, wobei es sich bei dem Alkoxysilanpolysulfid um Bis-3-triethoxysilylpropyldisulfid handelt.

**41.** Kupplungssystem nach einem der Ansprüche 35 bis 37, wobei das Alkoxysilanpolysulfid der Formel

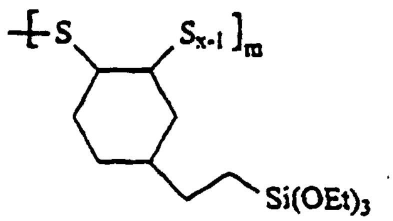

entspricht, in der x = 1 bis 8, m = 1 bis 200 ist und OEt Ethoxy bedeutet.

**42.** Kupplungssystem nach einem der Ansprüche 35 bis 41, wobei das Enamin der folgenden Formel (III-0) entspricht:

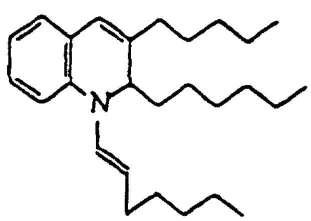

(III-0).

**43.** Kupplungssystem nach einem der Ansprüche 35 bis 41, wobei das Enamin unter den Enaminen ausgewählt ist, die von Dibutylamin, Anilin, Piperidin oder Pyrrolidin abgeleitet sind.

**44.** Kupplungssystem nach Anspruch 43, wobei das Enamin der Formel (III-1) oder der Formel (III-2) entspricht:

(III-1)

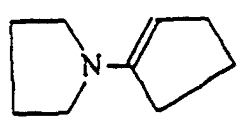

(III-2)

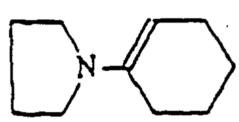

**45.** Verwendung eines Kupplungssystems nach einem der Ansprüche 35 bis 44 für die Kupplung eines verstärkenden weißen Füllstoffs und eines Dien-Elastomers in einer Kautschukzusammensetzung, die für die Herstellung von Luftreifen verwendbar ist.

**46.** Verwendung in Kombination eines Enamins und eines Guanidin-Derivats in einer Kautschukzusammensetzung,

die mit einem weißen Füllstoff verstärkt ist, die für die Herstellung von Luftreifen verwendbar ist, zur Aktivierung der Kupplungsfunktion (weißer Füllstoff/Dien-Elastomer) eines Alkoxysilanpolysulfids.

**47.** Verwendung nach Anspruch 46, wobei es sich bei dem Alkoxysilanpolysulfid um ein Bis-($C_1$-$C_4$)-alkoxysilylpropylpolysulfid handelt.

**48.** Verwendung nach Anspruch 47, wobei es sich bei dem Alkoxysilanpolysulfid um Bis-3-triethoxysilylpropyltetrasulfid handelt.

**49.** Verwendung nach Anspruch 47, wobei es sich bei dem Alkoxysilanpolysulfid um Bis-3-triethoxysilylpropyldisulfid handelt.

**50.** Verwendung nach Anspruch 46, wobei das Alkoxysilanpolysulfid der Formel

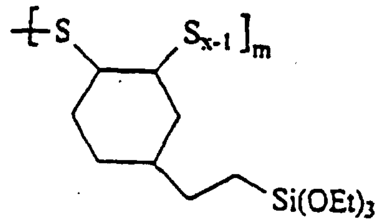

entspricht, in der x = 1 bis 8, m = 1 bis 200 ist und OEt Ethoxy bedeutet.

**51.** Verwendung nach einem der Ansprüche 46 bis 50, wobei das Enamin der folgenden Formel (III-0) entspricht:

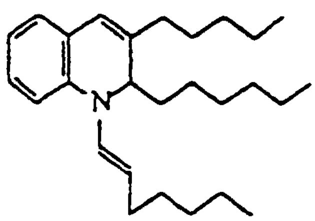

(III-0).

**52.** Verwendung nach einem der Ansprüche 46 bis 50, wobei das Enamin unter den Enaminen ausgewählt ist, die von Dibutylamin, Anilin, Piperidin oder Pyrrolidin abgeleitet sind.

**53.** Verwendung nach Anspruch 52, wobei das Enamin der Formel (III-1) oder der Formel (III-2) entspricht:

(III-1)

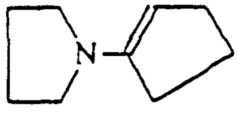

(III-2).

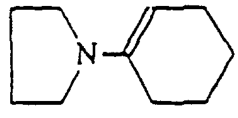

**54.** Verwendung nach einem der Ansprüche 46 bis 53, **dadurch gekennzeichnet, daß** es sich bei dem Guanidin-Derivat um Diphenylguanidin handelt.

## Claims

1. A rubber composition usable for the manufacture of tyres, comprising at least (i) one diene elastomer, (ii) a white filler as reinforcing filler, (iii) a polysulphurised alkoxysilane as coupling agent (white filler/diene elastomer), with which are associated (iv) an enamine and (v) a guanidine derivative.

2. A rubber composition according to Claim 1, in which the guanidine derivative is diphenylguanidine.

3. A rubber composition according to any one of Claims 1 or 2, in which the polysulphurised alkoxysilane is a bis-alkoxy($C_1$-$C_4$)silylpropyl polysulphide.

4. A rubber composition according to Claim 3, in which the polysulphurised alkoxysilane is bis-3-triethoxysilylpropyl tetrasulphide.

5. A rubber composition according to Claim 3, in which the polysulphurised alkoxysilane is bis-3-triethoxysilylpropyl disulphide.

6. A rubber composition according to any one of Claims 1 or 2, in which the polysulphurised alkoxysilane corresponds to the formula:

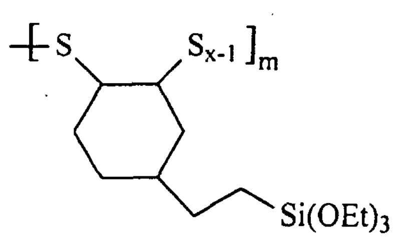

in which x = 1 to 8, m = I to 200, and OEt represents the ethoxyl radical.

7. A rubber composition according to any one of Claims 1 to 6, in which the quantity of polysulphurised alkoxysilane represents less than 8% relative to the weight of reinforcing white filler.

8. A rubber composition according to Claim 7, in which the quantity of polysulphurised alkoxysilane represents less than 6% relative to the weight of reinforcing white filler.

9. A rubber composition according to any one of Claims 1 to 8, in which the enamine is of the formula (III-0):

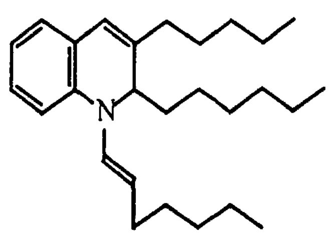

10. A rubber composition according to any one of Claims 1 a 8, in which the enamine is selected from among the enamines derived from dibutylamine, aniline, piperidine or pyrrolidine.

11. A rubber composition according to Claim 10, in which the enamine has as its formula one of the formulae (III-1) or (III-2):

(III-1)

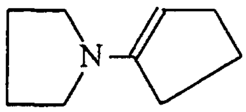

(III-2)

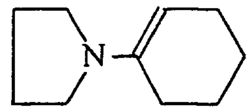

**12.** A rubber composition according to any one of Claims 1 to 11, in which the quantity of enamine represents between 1% and 25% relative to the weight of polysulphurised alkoxysilane.

**13.** A rubber composition according to Claim 12, in which the quantity of enamine represents between 3% and 17.5% relative to the weight of polysulphurised alkoxysilane.

**14.** A rubber composition according to any one of Claims 1 to 13, in which the total quantity of polysulphurised alkoxysilane and of enamine represents less than 10% relative to the weight of reinforcing white filler.

**15.** A rubber composition according to Claim 14, in which the total quantity of polysulphurised alkoxysilane and of enamine represents less than 8% relative to the weight of reinforcing white filler.

**16.** A rubber composition according to any one of Claims 1 to 15, in which the quantity of guanidine derivative represents between 0.5 and 4% relative to the weight of reinforcing white filler.

**17.** A rubber composition according to any one of Claims 1 to 16, in which the total quantity of polysulphurised alkoxysilane, of enamine and of guanidine derivative represents between 1% and 20% relative to the weight of reinforcing white filler.

**18.** A rubber composition according to Claim 17, in which the total quantity of polysulphurised alkoxysilane, of enamine and of guanidine derivative represents between 5% and 15% relative to the weight of reinforcing white filler.

**19.** A rubber composition according to Claim 18, in which the total quantity of polysulphurised alkoxysilane, of enamine and of guanidine derivative represents less than 12% relative to the weight of reinforcing white filler.

**20.** A rubber composition according to Claim 19, in which the total quantity of polysulphurised alkoxysilane, of enamine and of guanidine derivative represents less than 10% relative to the weight of reinforcing white filler.

**21.** A rubber composition according to any one of Claims 1 to 20, in which the reinforcing white filler is majoritarily silica.

**22.** A rubber composition according to any one of Claims 1 to 21, in which the reinforcing white filler constitutes the entire reinforcing filler.

**23.** A rubber composition according to any one of Claims 1 to 21, in which the reinforcing white filler is used in a mixture with carbon black.

**24.** A rubber composition according to any one of Claims 1 to 23, in which the diene elastomer is selected from the group which consists of polybutadienes, polyisoprenes or natural rubber, butadiene-styrene copolymers, butadiene-isoprene copolymers, isoprene-styrene copolymers, butadiene-styrene-isoprene copolymers, or a mixture of two or more of these compounds.

**25.** A rubber composition according to Claim 24, in which the diene elastomer is a butadiene-styrene copolymer possibly used in a mixture with a polybutadiene.

**26.** A rubber composition according to Claim 25, in which the diene elastomer is a butadiene-styrene copolymer prepared in solution having a styrene content of between 20% and 30% by weight, a content of vinyl bonds of the butadiene part of between 15% and 65%, a content of trans-1,4 bonds of between 20% and 75% and a glass transition temperature of between -20°C and -55°C, this butadiene-styrene copolymer possibly being used in a mixture with a polybutadiene having preferably more than 90% cis-1,4 bonds.

**27.** A process for preparing a rubber composition according to any one of Claims 1 to 26, **characterised in that** there are incorporated by kneading in at least (i) one diene elastomer, at least (ii) a white filler as reinforcing filler, (iii) a polysulphurised alkoxysilane as coupling agent (white filler/diene elastomer), (iv) an enamine and (v) a guanidine derivative.

**28.** A process according to Claim 27, **characterised in that**, in one or more steps, there are incorporated in (i) the diene elastomer, at least (ii) the white reinforcing filler, (iii) the polysulphurised alkoxysilane, (iv) the enamine and (v) the guanidine derivative, and that the entire mixture is thermomechanically kneaded until a maximum temperature of between 130°C and 200°C is reached.

**29.** A process according to Claim 28, **characterised in that** the maximum kneading temperature is between 145°C and 180°C.

**30.** The use of a rubber composition according to any one of Claims 1 to 26 for the manufacture of tyres or semi-finished rubber products intended for tyres, these semi-finished products being selected from the group comprising treads, underlayers for such treads, crown plies, sidewalls, carcass plies, beads, protectors, inner tubes or airtight internal rubbers for tubeless tyres.

**31.** A tyre comprising a rubber composition according to any one of Claims 1 to 26.

**32.** A semi-finished rubber product for tyres, comprising a rubber composition according to any one of Claims 1 to 26, this semi-finished product being selected in particular from among the group comprising treads, underlayers for these treads, crown plies, sidewalls, carcass plies, beads, protectors, inner tubes or airtight internal rubbers for tubeless tyres.

**33.** A semi-finished product according to Claim 32, consisting of a tread.

**34.** A tread according to Claim 33, **characterised in that** it is based on a rubber composition according to any one of Claims 24 to 26.

**35.** A coupling system (white filler/diene elastomer) for a rubber composition based on diene elastomer reinforced by a white filler, usable for the manufacture of tyres, **characterised in that** it is formed by the association of a polysulphurised alkoxysilane, an enamine and a guanidine derivative.

**36.** A coupling system according to Claim 35, in which the polysulphurised alkoxysilane represents more than 50% by weight of the coupling system.

**37.** A coupling system according to Claims 35 or 36, in which the guanidine derivative is diphenylguanidine.

**38.** A coupling system according to any one of Claims 35 to 37, in which the polysulphurised alkoxysilane is a bis-($C_1$-$C_4$) alkoxyl silylpropyl polysulphide.

**39.** A coupling system according to Claim 38, in which the polysulphurised alkoxysilane is bis-3-triethoxysilylpropyl tetrasulphide.

**40.** A coupling system according to Claim 38, in which the polysulphurised alkoxysilane is bis-3-triethoxysilylpropyl disulphide.

**41.** A coupling system according to any one of Claims 35 to 37, in which the polysulphurised alkoxysilane corresponds to the formula:

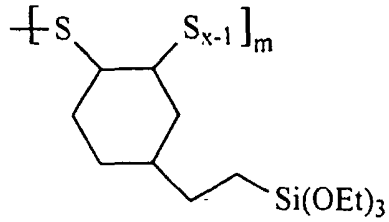

in which x = 1 to 8, m = 1 to 200, and OEt represents the ethoxyl radical.

**42.** A coupling system according to any one of Claims 35 to 41, in which the enamine is of the formula (III-0):

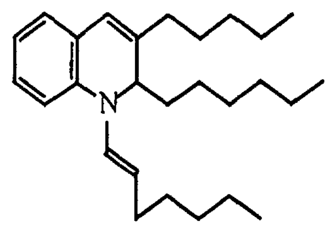

**43.** A coupling system according to any one of Claims 35 to 41, in which the enamine is selected from among the enamines derived from dibutylamine, aniline, piperidine or pyrrolidine.

**44.** A coupling system according to Claim 43, in which the enamine has as its formula one of the formulae (III-1) or (III-2):

(III-1)

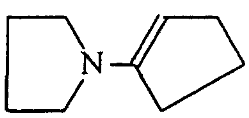

(III-2)

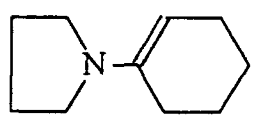

**45.** The use of a coupling system according to any one of Claims 35 to 44 for coupling a reinforcing white filler and a diene elastomer in a rubber composition usable for the manufacture of tyres.

**46.** The use in combination of an enamine and a guanidine derivative in a rubber composition reinforced with a white filler usable for the manufacture of tyres, in order to activate the coupling function (white filler/diene elastomer) of a polysulphurised alkoxysilane.

**47.** The use according to Claim 46, in which the polysulphurised alkoxysilane is a bis-($C_1$-$C_4$)alkoxy silylpropyl polysulphide.

**48.** The use according to Claim 47, in which the polysulphurised alkoxysilane is bis-3-triethoxysilylpropyl tetrasulphide.

**49.** The use according to Claim 47, in which the polysulphurised alkoxysilane is bis-3-triethoxysilylpropyl disulphide.

**50.** The use according to Claim 46, in which the polysulphurised alkoxysilane corresponds to the formula:

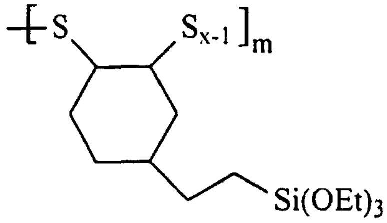

in which x = 1 to 8, m = 1 to 200, and OEt represents the ethoxyl radical.

**51.** The use according to any one of Claims 46 to 50, in which the enamine is of the formula (III-0):

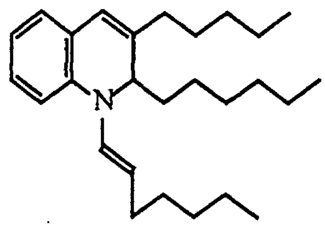

**52.** The use according to any one of Claims 46 to 50, in which the enamine is selected from among the enamines derived from dibutylamine, aniline, piperidine or pyrrolidine.

**53.** The use according to Claim 52, in which the enamine has as its formula one of the formulae (III-1) or (III-2):

(III-1)

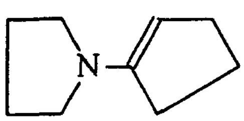

(III-2)

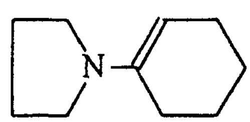

**54.** The use according to any one of Claims 46 to 53, **characterised in that** the guanidine derivative is diphenylguanidine.

Fig. 1

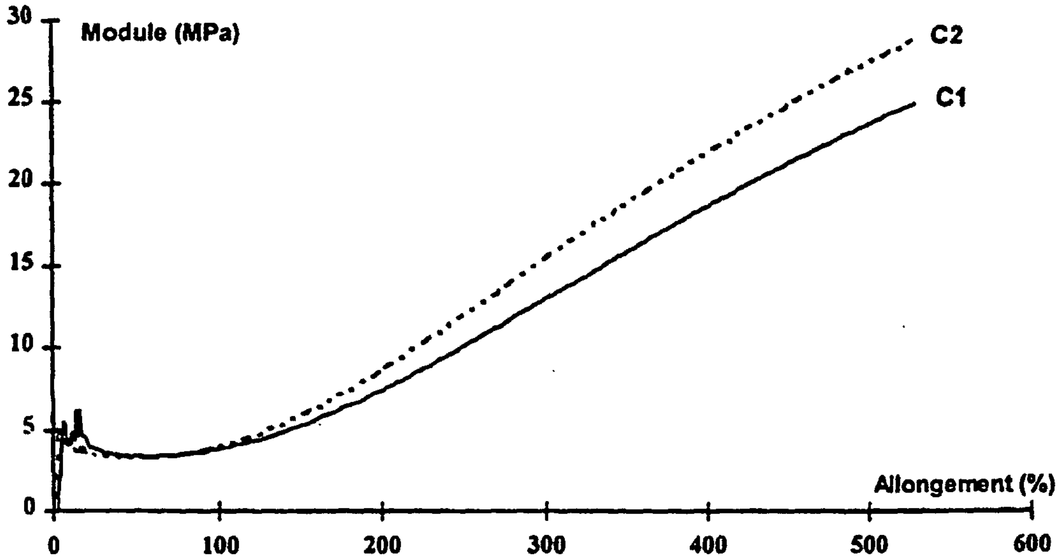
Module (MPa)
30
25
20
15
10
5
0
Allongement (%)
0
100
200
300
400
500
600
C2
C1

Fig. 2

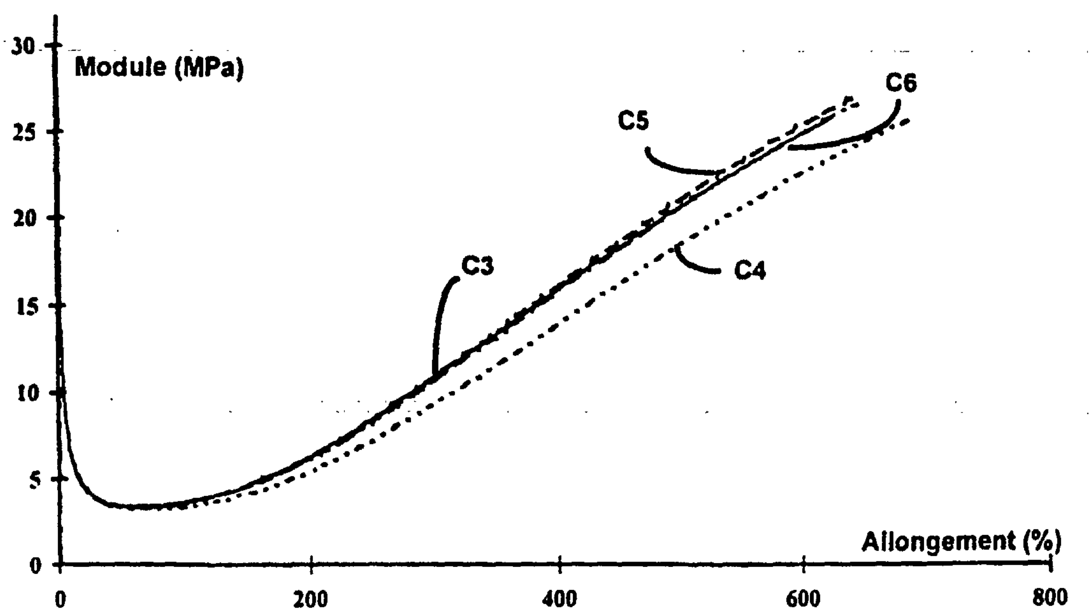
Module (MPa)
30
25
20
15
10
5
0
Allongement (%)
0
200
400
600
800
C3
C4
C5
C6

Fig. 3

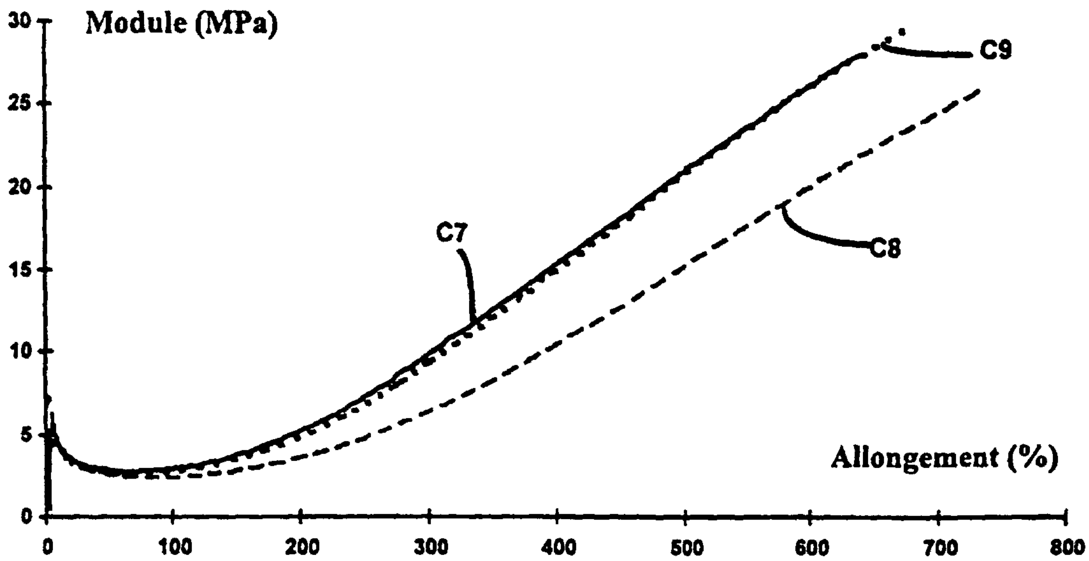
Module (MPa)
30
25
20
15
10
5
0
C9
C7
C8
Allongement (%)
0
100
200
300
400
500
600
700
800

Fig. 4

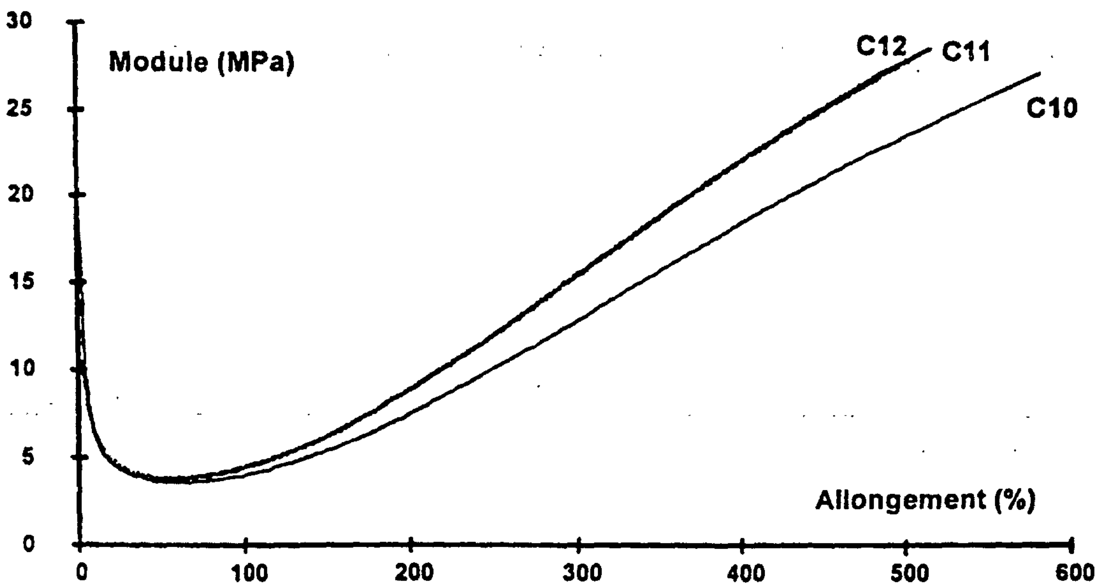
30
25
20
15
10
5
0
Module (MPa)
C12
C11
C10
Allongement (%)
0
100
200
300
400
500
600

Fig. 5

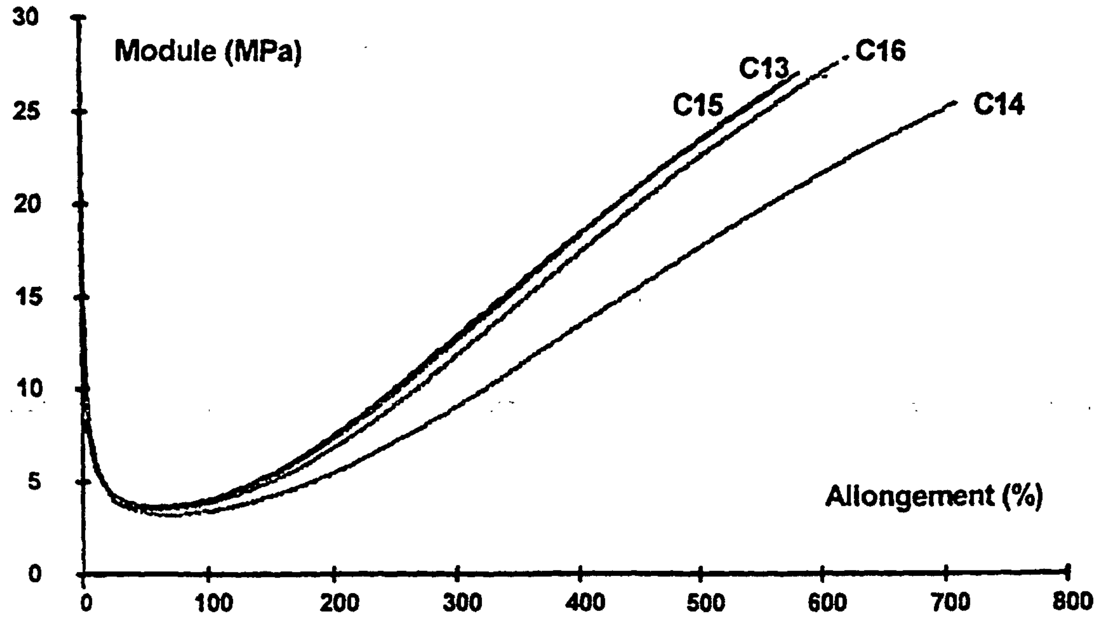
Module (MPa)
30
25
20
15
10
5
0
0
100
200
300
400
500
600
700
800
Allongement (%)
C13
C15
C16
C14

Fig. 6

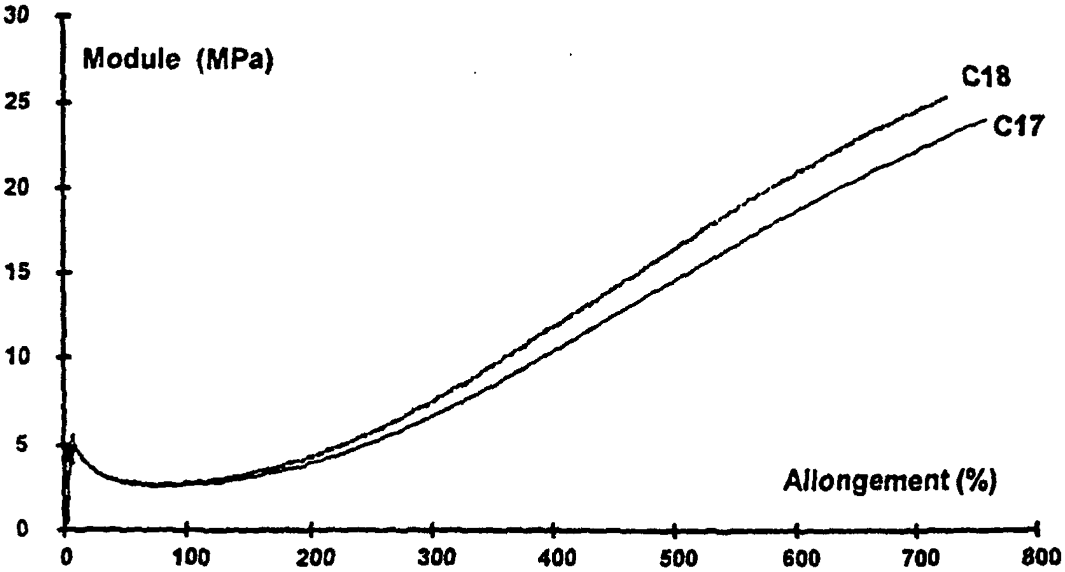
Module (MPa)
30
25
20
15
10
5
0
C18
C17
Allongement (%)
0
100
200
300
400
500
600
700
800

Fig. 7

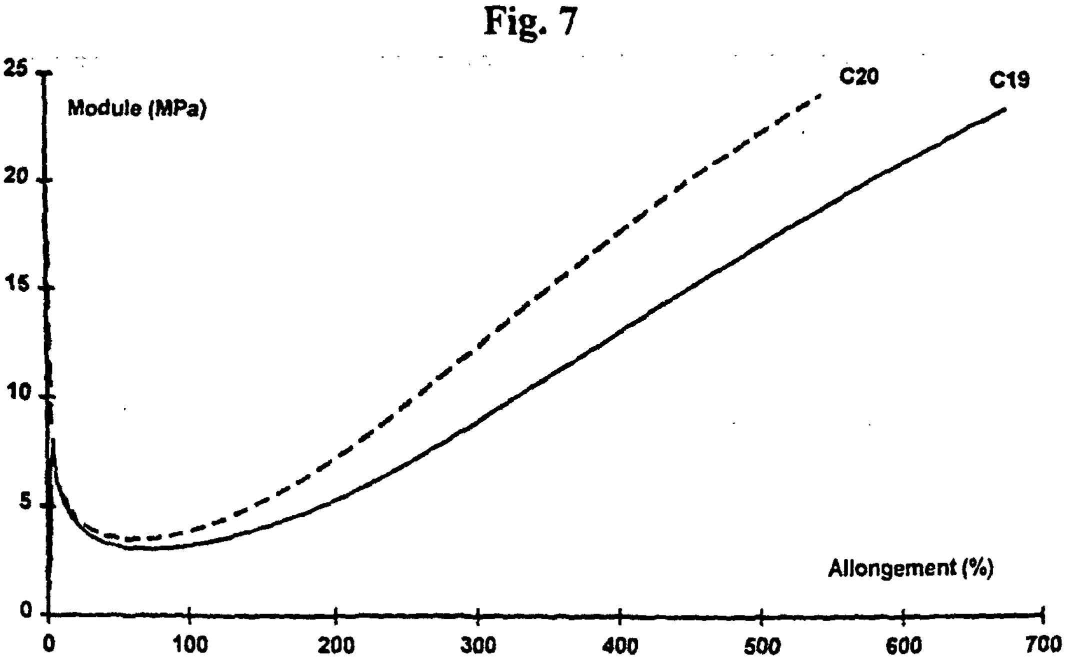
Module (MPa)
25
20
15
10
5
0
C20
C19
Allongement (%)
0
100
200
300
400
500
600
700

Fig. 8

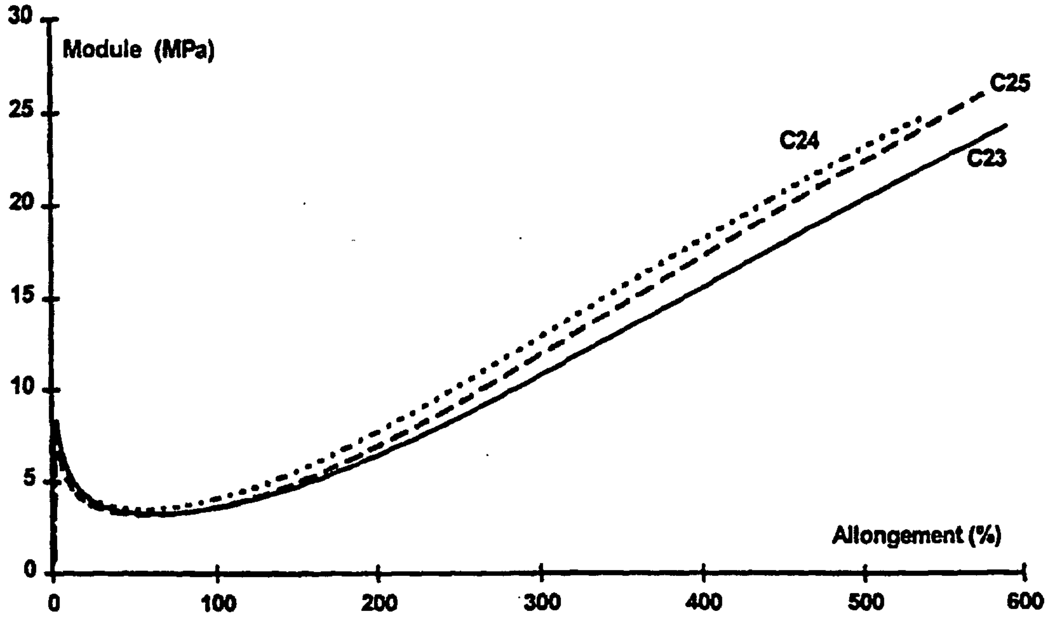
Module (MPa)
30
25
20
15
10
5
0
C24
C25
C23
Allongement (%)
0
100
200
300
400
500
600

Fig. 9

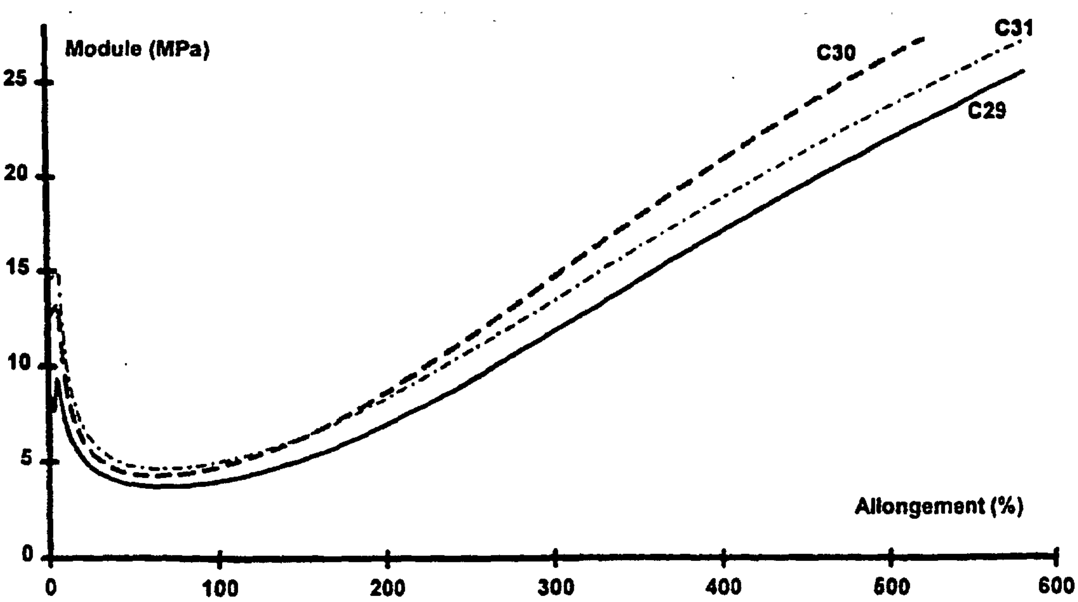
Module (MPa)
25
20
15
10
5
0
C30
C31
C29
Allongement (%)
0
100
200
300
400
500
600